# EUROPEAN PATENT APPLICATION

(11) **EP 4 607 675 A1**
(43) Date of publication of application: **27.08.2025**
(21) Application number: 23939142.8
(22) Date of filing: 08.08.2023
(51) Int. Cl.: H01M 50/30, H01M 50/342

(54) **BATTERY CELL, BATTERY AND ELECTRIC DEVICE**

(30) Priority: 31.05.2023 CN 202310640639
(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LI, Yao, Ningde, Fujian 352100 (CN); CHEN, Xiaobo, Ningde, Fujian 352100 (CN)
(74) Representative: Laufhütte, Dieter
(86) International application number: PCT/CN2023/111809
(87) International publication number: WO 2024/244162

(57) **Abstract**

Embodiments of the present application provide a battery cell, a battery, and an electrical device, which belong to the technical field of batteries. The battery cell includes a shell which includes a pressure relief component, in which, the pressure relief component is provided with a groove portion, is configured to be capable of cracking along the groove portion so as to release the pressure inside the battery cell, and has a fracture initiation position. The groove portion includes a first groove section, a second groove section and a third groove section, in which, the first groove section and the third groove section are oppositely arranged, and the second groove section is connected to the first groove section and the third groove section. The fracture initiation positions are formed at the first groove section and/or the third groove section. No fracture initiation position is formed at the second groove section, such that the pressure relief component has high fatigue resistance at the area of the second groove section, thereby reducing the possibility of the pressure relief component cracking at the middle area of the second groove section during the normal use of the battery cell, thus improving the long-term reliability of the pressure relief component, and prolonging the service life of the battery cell.

## Description

### CROSS-REFERENCE TO RELATED APPLICATIONS

The present application claims priority to Chinese Patent Application (2023106406395), entitled "BATTERY CELL, BATTERY, AND ELECTRICAL DEVICE" filed on May 31, 2023, which is incorporated by reference in the present application.

### TECHNCIAL FIELD

The present application relates to the technical field of batteries, and in particular, to a battery cell, a battery, and an electrical device.

### BACKGROUND

With the development of new energy technology, batteries are more and more widely used, such as used in mobile phones, laptops, battery cars, electric vehicles, electric aircraft, electric ships, electric toy cars, electric toy ships, electric toy airplanes and power tools.

A battery cell is generally provided with a pressure relief component which is configured to release pressure in the battery cell when the battery cell is subjected to thermal runaway so as to improve the reliability of the battery cell. In addition to improving the reliability of the battery cell, it is also needed to consider the service life of the battery cell. Therefore, how to prolong the service life of battery cell is a problem to be solved urgently in battery technology.

### SUMMARY OF THE INVENTION

Embodiments of the present application provide a battery cell, a battery and an electrical device, aiming to effectively prolong the service life of the battery cell.

In a first aspect, an embodiment of the present application provides a battery cell, which includes a shell, the shell includes a pressure relief component, the pressure relief component is provided with a groove portion and is configured to be capable of cracking along the groove portion so as to release the pressure inside the battery cell, and the pressure relief component has a fracture initiation position; the groove portion includes a first groove section, a second groove section and a third groove section, in which, the first groove section is arranged opposite the third groove section, and the second groove section is connected to the first groove section and the third groove section; and the fracture initiation positions are formed at the first groove section and/or the third groove section.

In the above technical solution, the fracture initiation positions of the pressure relief component are formed at the first groove section and/or the third groove section, and no fracture initiation position is formed in the second groove section, such that the pressure relief component has high fatigue resistance in the area of the second groove section, thereby reducing the possibility of the pressure relief component cracking at the second groove section during regular use of the battery cell, improving the long-term reliability of the pressure relief component, and prolonging the service life of the battery cell.

In some embodiments, the fracture initiation position is formed at the first groove section, and the residual thickness of the first groove section is less than that of the second groove section. In this way, the fracture initiation position can be formed near the position where the second groove section and the first groove section are connected; and during pressure relief, after the pressure relief component cracks at the fracture initiation position, cracks can also spread along the second groove section while spreading along the first groove section. In addition, because the residual thickness of the first groove section is less than that of the second groove section, that is equivalent to the residual thickness of the second groove section being increased, thereby improving the fatigue resistance of the pressure relief component in the area where the second groove section is arranged, and further reducing the possibility of the pressure relief component cracking in the area of the second groove section during regular use of the battery cell.

In some embodiments, the residual thickness of the first groove section is D₁, and the residual thickness of the second groove section is D₂, which meet: 0.15≤D₁/D₂≤0.95. If D₁/D₂<0.15, the residual thickness of the second groove section is too large, the risk that the pressure relief component cannot crack along the second groove section easily occurs during pressure relief, and the timeliness of cracking is poor; and if D₁/D₂>0.95, the residual thickness of the second groove section is too small, the risk that the pressure relief component cracks along the second groove section easily occurs during regular use of the battery cell, and the service life of the battery cell will be influenced. If 0.15≤D₁/D₂≤0.95, the pressure relief timeliness of the battery cell can be improved, and the service life of the battery cell can be prolonged.

In some embodiments, 0.3≤D₁/D₂≤0.9. The performance of the battery cell is improved, and the pressure relief timeliness and the service life of the battery cell can be improved and prolonged.

In some embodiments, 0.5≤D₁/D₂≤0.85. The comprehensive performance of the battery cell is further improved, the possibility of the pressure relief component cracking along the second groove section during regular use of the battery cell can be controlled at a relatively low level, and the possibility of the battery cell exploding due to thermal runaway can be controlled at a relatively low level.

In some embodiments, 0.03 mm≤D₁≤0.5mm.

In some embodiments, 0.15 mm≤D₁≤0.4mm.

In some embodiments, 0.05 mm≤D₂≤0.65mm.

In some embodiments, 0.25 mm≤D₂≤0.5mm.

In some embodiments, the depth of the first groove section is larger than that of the second groove section, so that the residual thickness of the first groove section is less than that of the second groove section. During molding, the first groove section can be processed deeper than the second groove section on the pressure relief component, thus the residual thickness of the first groove section is less than that of the second groove section, and the implementation mode is simple.

In some embodiments, the first groove section includes a first-stage groove and a second-stage groove which are arranged in the thickness direction of the pressure relief component, and the second-stage groove is arranged on the groove bottom surface of the first-stage groove. During molding, the first-stage groove can be molded in the pressure relief component, and then the second-stage groove is molded in the groove bottom surface of the first-stage groove so as to obtain the first groove section. In this way, the molding depth of each stage of groove in the first groove section can be reduced, the molding force applied to the pressure relief component during molding the first groove section can be reduced, and the possibility of generating cracks by the pressure relief component during molding the first groove section is reduced.

In some embodiments, the groove bottom surface of the first-stage groove is flush with the groove bottom surface of the second groove section. Therefore, the groove bottom surface of the first-stage groove and the groove bottom surface of the second groove section are coplanar; and during molding, the first-stage groove and the second-stage groove of the first groove section can be molded together, then the second-stage groove of the first groove section is molded, and thus the molding efficiency of the groove portion is improved.

In some embodiments, in the thickness direction of the pressure relief component, the pressure relief component is provided with a first surface and a second surface which are opposite to each other, the first-stage groove and the second-stage groove are sequentially formed in the direction from the first surface to the second surface, and the groove bottom surface of the second-stage groove is closer to the second surface than the groove bottom surface of the second groove section; and the groove bottom surface of the second-stage groove is connected to the groove bottom surface of the second groove section by a first inclined plane or a first arc surface. During pressure relief, after the pressure relief component cracks at the fracture initiation position, the cracks in the groove bottom surface of the second-stage groove can rapidly spread to the groove bottom surface of the second groove section along the first inclined plane or the first arc surface, thus the time for the cracks to spread from the first groove section to the second groove section can be decreased, and furthermore, the time for the pressure relief component to crack along the groove portion is further decreased.

In some embodiments, the fracture initiation position is formed at the third groove section, and the residual thickness of the third groove section is less than that of the second groove section. In this way, the fracture initiation position can be formed near the position where the second groove section and the third groove section are connected; and during pressure relief, after the pressure relief component cracks at the fracture initiation position, the cracks can also spread along the second groove section while spreading along the third groove section. Because the residual thickness of the third groove section is less than that of the second groove section, that is equivalent to the residual thickness of the second groove section being increased, thereby improving the fatigue resistance of the pressure relief component in the area where the second groove section is arranged, and further reducing the possibility of the pressure relief component cracking in the area of the second groove section during regular use of the battery cell. In addition, because the fracture initiation positions are formed at both the first groove section and the third groove section, when the pressure inside the battery cell reaches fracture initiation pressure, cracking may occur in both the fracture initiation positions at the first groove section and the third groove section, the cracks can spread from two ends of the second groove section to the middle position while spreading along the first groove section and the third groove section, thereby decreasing the time for the pressure relief component to crack along the groove portion.

In some embodiments, the residual thickness of the third groove section is equal to that of the first groove section. During pressure relief on the battery cell, the pressure relief component has better synchronism when cracking along the first groove section and the third groove section, thus the time for the pressure relief component to crack along the first groove section can be further decreased, and the pressure relief timeliness is improved.

In some embodiments, the residual thickness of the second groove section is D₂, and the residual thickness of the third groove section is D₃, which meet: 0.15≤D₃0₂≤0.95. If D₃/D₂<0.15, the residual thickness of the second groove section is too large, the risk that the pressure relief component cannot crack along the second groove section easily occurs during pressure relief, and the timeliness of cracking is poor; and if D₃/D₂>0.95, the residual thickness of the second groove section is too small, the risk that the pressure relief component cracks along the second groove section easily occurs during regular use of the battery cell, and the service life of the battery cell will be influenced. If 0.15≤D₃D₂≤0.95, the timeliness of pressure relief of the battery cell can be improved, and the service life of the battery cell can be prolonged.

In some embodiments, 0.3≤D₃/D₂≤0.9. The performance of the battery cell is improved, and the pressure relief timeliness and the service life of the battery cell can be improved and prolonged.

In some embodiments, 0.5≤D₃D₂≤0.85. The comprehensive performance of the battery cell is further improved, the possibility of the pressure relief component cracking along the second groove section during regular use of the battery cell can be controlled at a relatively low level, and the possibility of the battery cell exploding due to thermal runaway can be controlled at a relatively low level.

In some embodiments, 0.03 mm≤D₃≤0.5mm.

In some embodiments, 0.15 mm≤D₃≤0.4mm.

In some embodiments, the depth of the third groove section is larger than that of the second groove section, so that the residual thickness of the third groove section is less than that of the second groove section. During molding, the third groove section can be processed deeper than the second groove section on the pressure relief component, thus the residual thickness of the third groove section is less than that of the second groove section, and the implementation mode is simple.

In some embodiments, the third groove section includes a third-stage groove and a fourth-stage groove which are arranged in the thickness direction of the pressure relief component, and the fourth-stage groove is formed in the groove bottom surface of the third-stage groove. During molding, the third-stage groove can be molded in the pressure relief component, and then the fourth-stage groove is molded at the groove bottom surface of the third-stage groove so as to obtain the third groove section; and therefore, the molding depth of each stage of groove in the third groove section can be reduced, the molding force applied to the pressure relief component during molding the third groove section is reduced, and as a result, the possibility of the pressure relief component cracking during molding the third groove section is reduced.

In some embodiments, the groove bottom surface of the third-stage groove is flush with the groove bottom surface of the second groove section. In this way, the groove bottom surface of the third-stage groove and the groove bottom surface of the second groove section are coplanar; and during molding, the third-stage groove of the third groove section and the second groove section can be molded together, then the fourth-stage groove of the third groove section is molded, and thus the molding efficiency of the groove portion is improved.

In some embodiments, in the thickness direction of the pressure relief component, the pressure relief component is provided with the first surface and the second surface which are opposite to each other, the third-stage groove and the fourth-stage groove are sequentially formed in the direction from the first surface to the second surface, and the groove bottom surface of the fourth-stage groove is closer to the second surface than the groove bottom surface of the second groove section; and the groove bottom surface of the fourth-stage groove is connected to the groove bottom surface of the second groove section by a second inclined plane or a second arc surface. During pressure relief, after the pressure relief component cracks at the fracture initiation position, the cracks in the groove bottom surface of the fourth-stage groove can rapidly spread to the groove bottom surface of the second groove section along the second inclined plane or the second arc surface, thus the time for the cracks to spread from the third groove section to the second groove section can be decreased, and furthermore, the time for the pressure relief component to crack along the groove portion is reduced.

In some embodiments, in the extending direction of the second groove section, two ends of the second groove section are connected to the first groove section and the third groove section respectively. Therefore, the two ends of the second groove section do not extend over the first groove section and the third groove section respectively, and in the pressure relief process, pressure can be accurately released through a region defined by the first groove section, the second groove section and the third groove section, other regions of the pressure relief component are greatly prevented from cracking and pressure relief, and directional pressure relief is easier to realize.

In some embodiments, the first groove section and the second groove section are connected to a first position, and the first position deviates from the two ends of the first groove section in the extending direction of the first groove section. In the pressure relief process, after the pressure relief component cracks from the first position, cracks can spread from the first position to the two ends along first groove section, and thus the time for the pressure relief component to crack along the first groove section is decreased.

In some embodiments, in the extending direction of the first groove section, the first position is at the midpoint position of the first groove section. In the pressure relief process, the cracks spread with the same distance from the first position to the two ends along the first groove section, thus further decreasing the time for the pressure relief component to crack along the first groove section.

In some embodiments, the third groove section and the second groove section are connected to a second position, and in the extending direction of the third groove section, the second position deviates from two ends of the third groove section. In the pressure relief process, after the pressure relief component cracks from the second position, the cracks can spread from the second position to the two ends along the third groove section, and thus the time for the pressure relief component to crack along the third groove section is decreased.

In some embodiments, in the extending direction of the third groove section, the second position is at the midpoint position of the third groove section. In the pressure relief process, the cracks spread with the same distance from the second position to the two ends along the third groove section, thus further decreasing the time for the pressure relief component to crack along the third groove section.

In some embodiments, the first groove section, the second groove section and the third groove section are all grooves extending along a linear track. The first groove section, the second groove section and the third groove section are all linear grooves, so that the difficulty in molding of the first groove section, the second groove section and the third groove section can be reduced.

In some embodiments, the first groove section is vertical to the second groove section; and/or, the third groove section is vertical to the second groove section. If the first groove section is vertical to the second groove section, the stress near the position where the first groove section and the second groove section are connected will be more concentrated; and if the fracture initiation position is near the position where the first groove section and the second groove section are connected, and under the condition that the fracture initiation pressure of the battery cell is constant, the machining depth of the first groove section can be reduced, thereby reducing the difficulty in machining the first groove section. If the third groove section is vertical to the second groove section, the stress near the position where the third groove section and the second groove section are connected will be more concentrated; and if the fracture initiation position is near the position where the third groove section and the second groove section are connected, and under the condition that the fracture initiation pressure of the battery cell is constant, the machining depth of the third groove section can be reduced, thus reducing the difficulty in machining the third groove section.

In some embodiments, the first groove section, the second groove section and the third groove section define a pressure relief region; the pressure relief component is provided with a guide groove, the guide groove and the second groove section are arranged at an interval, and the guide groove is configured to guide the pressure relief region to be turned over and opened. The arranged guide groove is beneficial to turning over and opening the pressure relief region, which reduces the difficulty in turning over the pressure relief region, and thus the pressure relief timeliness can be effectively improved.

In some embodiments, the first groove section, the second groove section and the third groove section define two pressure relief regions, and the two pressure relief regions are respectively positioned on two sides of the second groove section; and the pressure relief component is provided with two guide grooves, the second groove section is positioned between the two guide grooves, and the two guide grooves are configured to guide the two pressure relief regions to be turned over and opened respectively. In the pressure relief process, the two guide grooves can respectively play a role in guiding the two pressure relief regions, so that the opening rate of the two pressure relief regions is increased, and pressure relief can be performed timely.

In some embodiments, the first groove section and the third groove section are both not in contact with the guide grooves. The guide grooves are not easy to affect the first groove section and the third groove section, thus the anti-fatigue strength of the pressure relief component at the first groove section and the third groove section is improved, and the possibility of the pressure relief component cracking from the connected position during regular use of the battery cell due to stress concentration caused by the connection of the guide grooves with the first groove section and the third groove section is reduced. In addition, in the pressure relief process, after the pressure relief component cracks along the first groove section and the third groove section, the cracks are not easy to spread to the guide grooves, and thus the possibility of the pressure relief region separating and flashing from the pressure relief component after being opened is reduced.

In some embodiments, in the thickness direction of the pressure relief component, the guide groove and the groove portion are respectively formed in two sides of the pressure relief component. On one hand, the influence of the guide groove on the groove portion during molding is reduced; and on the other hand, the guide groove can play a good role in guiding the pressure relief region, so that the pressure relief region is easier to turn over and open.

In some embodiments, the guide grooves extend in the extending direction of the second groove section.

In some embodiments, in the extending direction of the second groove section, the first groove section and the third groove section are respectively positioned on two sides of the guide grooves, the length of the part of the second groove section between the first groove section and the third groove section is L₁, and the length of the guide grooves is L₂, which meet: 1mm≤L₁-L₂≤10mm. If L₁-L₂<1mm, the space between at least one of the first groove section and the third groove and the guide grooves is small, the influence of the guide grooves on the first groove section and the third groove section is large, so the possibility of the pressure relief component cracking in advance at the position, close to the guide grooves, on the first groove section or the third groove section is easily caused, and the possibility of pressure relief in advance may be increased. If L₁-L₂>10mm, the length of the guide grooves is small, and the guide grooves are poor capability of assisting in turning over the pressure relief region. However, if 1mm≤L₁-L₂≤10mm, the possibility of the pressure relief component releasing pressure in advance can be reduced, and the capability of the guide grooves in assisting turning over and opening of the pressure relief region is improved.

In some embodiments, 2mm≤L₁-L₂≤6mm. The possibility of the pressure relief component releasing pressure in advance is further reduced, and the capability of the guide grooves in assisting turning over and opening of the pressure relief region is further improved.

In some embodiments, in the extending direction of the first groove section, the space between the guide grooves and the second groove section is L₃, and the length of the part, extending from the second groove section to the direction close to the guide groove, of the first groove section is L₄, which meet: 0.5mm≤|L₃-L₄|≤15mm. If |L₃-L₄|<0.5mm, the distance from the end part of the first groove section to the guide grooves is small, and when the cracks of the pressure relief component spread to the end part of the first groove section along the first groove section, the cracks easily spread to the guide grooves to cause the separation of the pressure relief region; if|L₃-L₄|>15mm, under the condition that L₃>L₄, the space between the guide grooves and the second groove section is large, so the capability of the guide grooves in assisting turning over of the pressure relief region is poor; and under the condition that L₃<L₄, the space between the guide grooves and the second groove section is small, so the turning over and opening area of the pressure relief region is less, and the pressure relief area of the pressure relief region is reduced. If 0.5mm≤|L₃-L₄|≤15mm, the possibility of separation and splashing of the pressure relief region is reduced, the difficulty in turning over and opening of the pressure relief region is increased, and the opening area of the pressure relief region is increased.

In some embodiments, 1mm≤|L₃-L₄|≤10mm.

In some embodiments, the shell includes a first wall portion; the pressure relief component serves as the first wall portion; or, the pressure relief component and the first wall portion are separably arranged, and the pressure relief component is arranged on the first wall portion. If the first wall portion serves as the pressure relief component, the groove portion can be directly molded in the first wall portion to form an integrated pressure relief structure, so that the reliability is improved, the process of mounting the pressure relief component is omitted, and the production cost for the battery cell can be reduced. If the pressure relief component is arranged on the first wall portion, the pressure relief component is a component independent of the shell, and the pressure relief component and the shell can be independently produced and assembled, so that the production difficulty is low and the efficiency is high.

In some embodiments, the shell includes a case and an end cover; the case is provided with an opening; and the end cover seals the opening and serves as the first wall portion. Therefore, the end cover has a pressure relief function, and the difficulty in molding the groove portion in the end cover is reduced.

In some embodiments, the shell includes the case and the end cover, and the case is provided with the opening; the end cover seals the opening; and at least one wall portion of the case serves as the first wall portion. Therefore, the case has the pressure relief function, and during pressure relief, emissions discharged from the interior of the battery cell do not easily influence external components on the outer side of the end cover, so that the possibility of the external components being damaged by the emissions is reduced.

In some embodiments, the case includes a bottom wall and a plurality of side walls, the plurality of side walls are arranged around the bottom wall, and an opening is formed at one end, opposite to the bottom wall, of the case; and the bottom wall serves as the first wall portion. The bottom wall has a pressure relief function, so when the battery cell is subjected to thermal runaway, pressure relief can be carried out through the bottom wall; and in the battery, the pressure relief component is not easily shielded by other battery cells.

In some embodiments, the first wall portion is a rectangular wall portion, the second groove section extends in the length direction of the first wall portion, and the first groove section and the third groove section both extend in the width direction of the first wall portion. Therefore, the second wall portion can provide more space for the second groove section, the second groove section can be made longer, and thus the pressure relief area of the pressure relief component can be increased.

In some embodiments, in the thickness direction of the pressure relief component, the first wall portion is provided with an outer surface, and the outer surface deviates from the interior of the shell; the first groove section is provided with a first midplane extending in the extending direction, the second groove section is provided with a second midplane extending in the extending direction, and the third groove section is provided with a third midplane extending in the extending direction of the third groove section; and the minimum distance from the central point of the outer surface to the first midplane is M₁, the minimum distance from the central point of the outer surface to the second midplane is M₂, and the minimum distance from the central point of the outer surface to the third midplane is M₃, which meet: M₂<M₁, M₂<M₃. When the internal pressure of the battery cell changes, the closer the first wall portion is to the central point, the easier the deformation is; and ₂<M₁, M₂<M₃, so that the first groove section and the third groove section are farther away from the central point, and the anti-fatigue strength of the pressure relief component at the first groove section and the third groove section is improved.

In some embodiments, in the thickness direction of the pressure relief component, the projection of the central point of the outer surface is within the second groove section; and/or, | M₃-M₁|≤5mm. If the projection of the central point of the outer surface is within the second groove section, the second groove section is closer to the central point of the outer surface, and the pressure relief component can crack along the second groove section more timely during pressure relief, thus improving the pressure relief timeliness of the pressure relief component. If | M₃-M₁|≤5mm, the first groove section and the third groove section are far from the central point, thus reducing the influence of deformation of the pressure relief component near the central point on the first groove section and the third groove section.

In a second aspect, an embodiment of the present application provides a battery, which includes the battery cell provided by any embodiment in the first aspect.

In a third aspect, the embodiments of the present application provide an electrical device, including the battery cell provided by any embodiment of the first aspect. The battery cell is configured to supply electric energy to the electric device.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided by some embodiments of the present application;
FIG. 4 is an axonometric diagram of a battery cell provided by some embodiments of the present application;
FIG. 5 is a partial view of a pressure relief component shown in FIG. 4;
FIG. 6 is an A-A cross-sectional view of a pressure relief component shown in FIG. 5;
FIG. 7 is a partial enlarged view of a part B in FIG. 6.
FIG. 8 is a partial enlarged view of a part C in FIG. 6;
FIG. 9 is a partial enlarged view of a battery cell provided by some other embodiments of the present application;
FIG. 10 is a partial view of a pressure relief component shown in FIG. 9;
FIG. 11 is a D-D cross-sectional view of a pressure relief component shown in FIG. 10;
FIG. 12 is a partial enlarged view of a part E in FIG. 11;
FIG. 13 a partial sectional view of a pressure relief component provided by some other embodiments of the present application;
FIG. 14 is a partial enlarged view of a part F of a pressure relief component in FIG. 11;
FIG. 15 is a partial sectional view of a pressure relief component provided by yet other embodiments of the present application;
FIG. 16 is a partial view of a pressure relief component provided by some other embodiments of the present application;
FIG. 17 is a G-G cross-sectional view of a pressure relief component shown in FIG. 16;
FIG. 18 is an exploded view of a shell provided by some embodiments of the present application;
FIG. 19 is an exploded view of a shell provided by some other embodiments of the present application;
FIG. 20 is an exploded view of a shell provided by yet other embodiments of the present application;
FIG. 21 is an exploded view of a shell provided by still yet other embodiments of the present application; and
FIG. 22 is a partial view of a first wall portion provided by some embodiments of the present application.

Reference numerals: 1-shell; 11-case; 111-bottom wall; 112-side wall; 12-end cover; 13-pressure relief component; 131-groove portion; 1311-first groove section; 1311a-first groove bottom surface; 1311b-first groove side surface; 1311c-first-stage groove; 1311d-second-stage groove; 1311e-first arc surface; 1311f-first midplane; 1312-second groove section; 1312b-second groove bottom surface; 1312c-second midplane; 1313-third groove section; 1313a-third groove bottom surface; 1313c-third-stage groove; 1313d-fourth-stage groove; 1313e-second arc surface; 1313f-third midplane; 1314-fracture initiation position; 1315-first position; 1316-second position; 132-first surface; 133-second surface; 134-pressure relief region; 135-guide groove; 14-first wall portion; 141-pressure relief hole; 142-outer surface; 1421-central point; 2-electrode assembly; 21-tab; 3-electrode terminal; 4-current collecting component; 5-insulating member; 10-battery cell; 20-box body; 201-first portion; 202-second portion; 100-battery; 200-controller; 300-motor; 1000-vehicle; X-thickness direction of pressure relief component; Y-length direction of first wall portion; and Z-width direction of first wall portion.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium ion battery, a sodium ion battery, a sodium-lithium ion battery, a lithium metal battery, a sodium metal battery, a lithium-sulfur battery, a magnesium ion battery, a nickelhydrogen battery, a nickel-cadmium battery, a lead storage battery and the like.

The battery cell generally includes an electrode assembly. The electrode assembly includes a positive electrode, a negative electrode and a spacer. In the charging and discharging process of the battery cell, active ions (such as lithium ions) are intercalated and de-intercalated between the positive electrode and the negative electrode in a reciprocating manner. The spacer is arranged between the positive electrode and the negative electrode, so that the risk of short circuit of the positive electrode and the negative electrode can be reduced, and moreover, the active ions can pass.

In some embodiments, the positive electrode can be a positive electrode plate, and the positive electrode plate may include a positive electrode current collector and a positive electrode active material disposed on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon-fine electrode, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate can include a negative electrode current collector.

For example, a metal foil, a foam metal, or a composite current collector may be used as the negative electrode current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, or foam carbon, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, each negative electrode plate may include a negative electrode current collector and a negative active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, siliconoxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the spacer is an isolation film. The isolation film can be any well-known porous separator with high chemical stability and mechanical stability.

As an example, the material of the isolation film may be selected from a group consisting of at least one of glass fiber, non-woven fabric, polyethylene, polypropylene, and polyvinylidene fluoride. The isolation film can be a singlelayer film or a multi-layer composite film. When the isolation film is the multi-layer composite film, the materials of all layers can be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode and plays a role of transmitting ions and isolates the positive electrode from the negative electrode.

In some embodiments, the battery cell further includes an electrolyte, and the electrolyte plays a role in conducting ions between the positive electrode and the negative electrode. The electrolyte can be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent can be ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte can be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

As an example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte and a hydride solid electrolyte.

As an example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tab includes a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

A battery mentioned in the embodiments of the present application is a single physical module including one or a plurality of battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

In the development of battery technology, it is needed to consider many design factors at the same time, such as energy density, cycle life, discharge capacity, charge-discharge rate and other performance parameters, in addition, it is also necessary to consider the safety of batteries.

In order to improve the safety of the battery cell, a pressure relief component can be set in the battery cell, which can release the pressure inside the battery cell when the battery cell is subjected to thermal runaway. In order to realize timely pressure relief of the pressure relief component, grooves can be formed in the pressure relief component, and the positions with the grooves in the pressure relief component are thinner, so when the internal pressure of the battery cell reaches a threshold, the pressure relief component cracks from the grooves to achieve the purpose of releasing the pressure inside the battery cell.

In order to further improve the pressure relief timeliness of the pressure relief component, the grooves in the pressure relief component can be divided into a plurality of sections, such as a first groove section, a second groove section and a third groove section, in which, the first groove section and the third groove section are oppositely arranged, and the second groove section is connected to the first groove section and the third groove section. Therefore, after the pressure relief component cracks along the first groove section, the second groove section and the third groove section, a large pressure relief area is achieved, and rapid pressure relief is further realized. In such battery cell, the pressure relief component has a fracture initiation position, that is, when the pressure in the battery cell reaches fracture initiation pressure, the pressure relief component cracks at the fracture initiation position firstly. The fracture initiation position is generally formed at the second groove section, and when the pressure in the battery cell reaches the fracture initiation pressure, the pressure relief component cracks at the fracture initiation position, and then cracks spread to the first groove section and the third groove section along the second groove section.

During regular use of the battery cell, the pressure in the battery cell may change; and in the long-term use process, the pressure relief component may deform along with the pressure change of the battery cell, so the pressure relief component can crack at the second groove section, especially the fatigue resistance of the area near the fracture initiation position at the second groove section is poor, which leads to the risk that the pressure relief component cracks at the area of the second groove section during regular use of the battery cell, affecting the service life of the battery cell.

In view of this, an embodiment of the present application provides the battery cell, the pressure relief component in the battery cell is provided with the groove portion, the groove portion includes the first groove section, the second groove section and the third groove section, in which, the first groove section and the third groove section are oppositely arranged, the second groove section is connected to the first groove section and the third groove section, and the fracture initiation positions of the pressure relief component are formed at the first groove section and/or the third groove section.

The battery cell in the embodiments of the present application is suitable for a battery and an electrical device using the battery cell.

The electrical device may be, but not limited to, a vehicle, a mobile phone, a portable device, a laptop computer, a ship, a spacecraft, an electric toy or an electric tool, etc. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

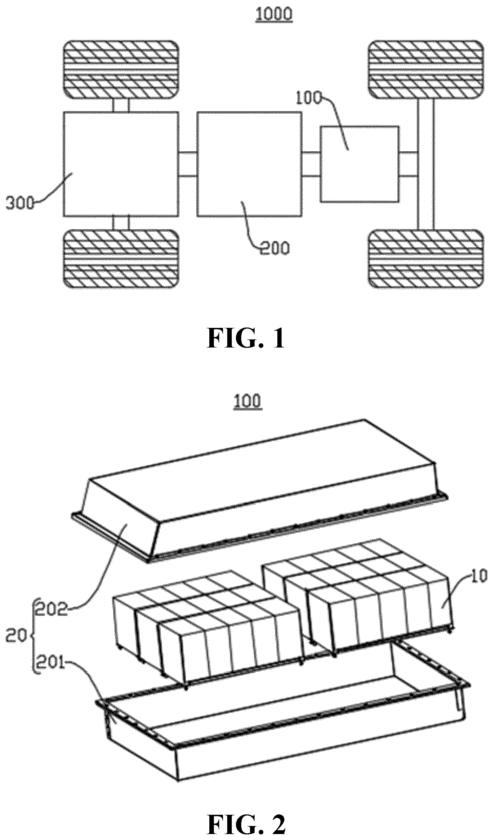

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Referring to FIG. 2, FIG. 2 is an exploded diagram of a battery 100 according to some embodiments of the present application. The battery 100 includes a box cell 10 and a box body 20. The battery cell 10 is accommodated in the box body 20.

The box body 20 is a component for accommodating the battery cell 10, and the box body 20 provides an accommodating space for the battery cell 10. The box body 20 may be of various structures. In some embodiments, the box body 20 may include a first portion 201 and a second portion 202. The first portion 201 and the second portion 202 are covered by each other to define the accommodating space for accommodating the battery cell 10. The first portion 201 and the second portion 202 may have a variety of shapes, such as a cuboid, a cylinder, etc. The first portion 201 may be of a hollow structure with one side open, the second portion 202 may also be of a hollow structure with one side open, and the open side of the second portion 202 covers the open side of the first portion 201, so as to form the box body 20 having the accommodating space. It is also possible that the first portion 201 may be of a hollow structure with one side open, the second portion 202 may be a plate-like structure, and the second portion 202 covers the open side of the first portion 201, so as to form the box body 20 having the accommodating space. The first portion 201 and the second portion 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in series-parallel. The series-parallel connection means that some of the plurality of battery cells 10 are connected in series and some are connected in parallel. It is possible that the plurality of battery cells 10 are connected in series or in parallel or in series-parallel first to form a plurality of battery modules, which may then be connected in series or in parallel or in series-parallel to form an entirety that is accommodated in the box body 20. Alternatively, all of the battery cells 10 may be directly connected together by series connection, or parallel connection, or parallel-series connection, and then the integral whole formed by all of the battery cells 10 is accommodated within the box body 20.

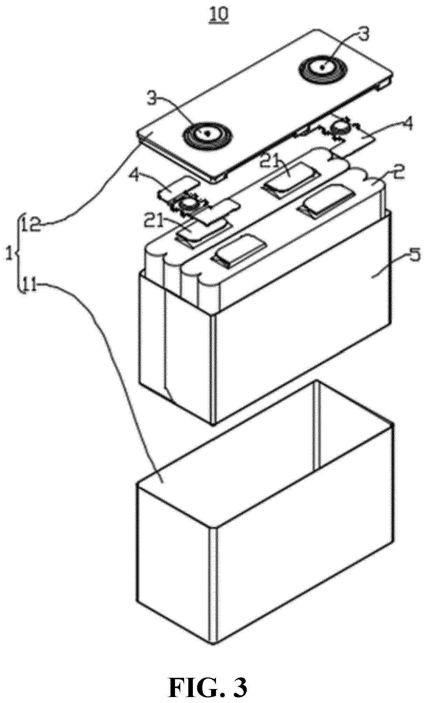

With reference to FIG. 3, FIG. 3 is an exploded view of a battery cell 10 provided by some embodiments of the present application. The battery cell 10 can include a shell 1 and an electrode assembly 2, and the electrode assembly 2 is accommodated in the shell 1.

In some embodiments, the shell 1 can include a case 11 and an end cover 12, the case 11 is provided with an opening, and the end cover 12 seals the opening of the case 11.

The case 11 is a component for accommodating the electrode assembly 2, the case 11 can be of a hollow structure with an opening formed at one end, and the case 11 can be of a hollow structure with openings formed in two opposite ends. The case 11 can be in various shapes, such as a cylinder shape, and a cuboid shape. The case 11 can be made of various materials, such as copper, iron, aluminum, steel, and aluminum alloy.

The end cover 12 is a component that closes the opening of the case 11 to isolate an internal environment of the battery cell 10 from an external environment. The end cover 12 and the case 11 jointly define an accommodating space for accommodating the electrode assembly 2, an electrolyte solution and other components. The end cover 12 can be connected to the case 11 in a welding or rolling sealing manner so as to seal the opening of the case 11. The shape of the end cover 12 can be matched with the shape of the shell 1, for example, if the case 11 is of a cuboid structure, the end cover 12 will be of a rectangular plate-shaped structure matched with the shell 1, for another example, if the case 11 is of a cylinder structure, and the end cover 12 will be of a circular plate-shaped structure matched with the case 11. The case 12 may also be made of various materials, such as copper, iron, aluminum, steel, aluminum alloy, and plastic. The material of the end cover 12 and the material of the case 11 may be the same or different.

In the embodiment where the case 11 has the opening formed at one end, one end cover 12 can be correspondingly provided. In an embodiment that the case 11 is provided with openings in two opposite ends, two end covers 12 can be correspondingly arranged, the two end covers 12 seal the two openings of the case 11 respectively, and the two end covers 12 and the case 11 jointly define the accommodating space.

In some embodiments, the battery cell 10 may further include an electrode terminal 3, and the electrode terminal 3 is arranged on the shell 1 and is electrically connected to a tab 21 of the electrode assembly 2 so as to output electric energy of the battery cell 10. The electrode terminal 3 can be arranged on the case 11 of the shell 1, or arranged on the end cover 12 of the shell 1. The electrode terminal 3 can be directly connected to the tab 21, for example, the electrode terminal 3 is directly welded with the tab 21. The electrode terminal 3 can also be indirectly connected to the tab 21, for example, the electrode terminal 3 is indirectly connected to the tab 21 by means of a current collecting member 4. The current collecting member 4 can be a metal conductor, such as copper, iron, aluminum, steel, and aluminum alloy.

As an example, as shown in FIG. 3, if the opening is formed at one end of the case 11, one end cover 12 is arranged in the shell 1, and one end cover 12 seals one opening of the case 11. Two electrode terminals 3 are arranged on the end cover 12, and the two electrode terminals 3 are respectively a positive electrode terminal and a negative electrode terminal; a positive electrode tab and a negative electrode tab are formed at one end of the electrode assembly 2 facing the end cover 12; and the positive electrode terminal is connected to the positive electrode tab by means of one current collecting member 4, and the negative electrode terminal is electrically connected to the negative electrode tab by means of the other current collecting member 4.

In some embodiments, with reference to FIG. 3, the battery cell 10 can further include an insulating member 5, the insulating member 5 is a component for isolating the case 11 from the electrode assembly 2, and the insulating isolation of the case 11 and the electrode assembly 2 is realized by the insulating member 5. The insulating member 5 is made of an insulating material, and the materials of the insulating member 5 include but are not limited to plastic, rubber and the like.

As an example, the insulating member 5 coats the outer side of the electrode assembly 2 in the circumferential direction of the opening of the case 11. One or a plurality of electrode assemblies 2 may arranged in the shell 1. If one electrode assembly 2 is arranged, the insulating member 5 is coated around the electrode assembly 2; and if the plurality of electrode assemblies 2 are arranged, one insulating member 5 may be provided corresponding to one electrode assembly 2, each insulating member 5 is coated around one electrode assembly 2, or the plurality of electrode assemblies 2 may be used as an integral component, and the insulating member 5 is coated around the integral member.

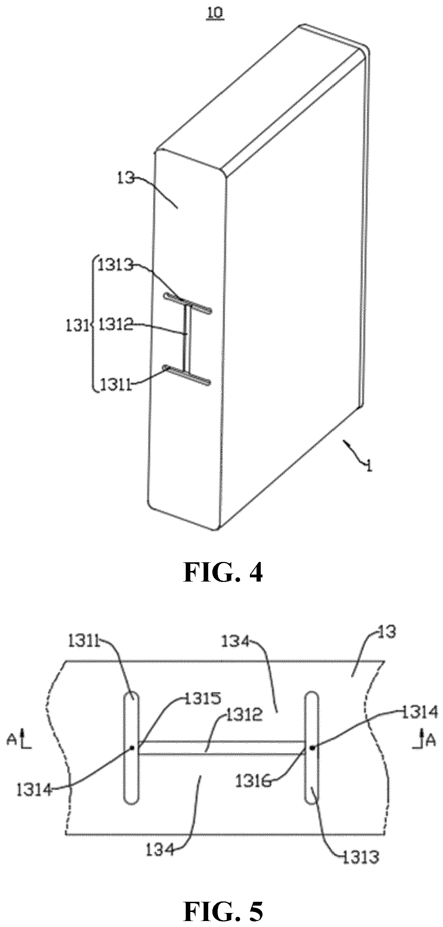

With reference to FIG. 4 and FIG. 5, FIG. 4 is an axonometric diagram of a battery cell 10 provided by some embodiments of the present application; and FIG. 5 is a partial view of a pressure relief component 13 in FIG. 4. An embodiment of the present application provides the battery cell 10; the battery cell 10 includes a shell 1, the shell 1 includes the pressure relief component 13, the pressure relief component 13 is provided with a groove portion 131 and is configured to be capable of cracking along the groove portion 131 to release the pressure inside the battery cell 10; and the pressure relief component 13 has a fracture initiation position 1314. The groove portion 131 includes a first groove section 1311, a second groove section 1312 and a third groove section 1313, in which, the first groove section 1311 and the third groove section 1313 are oppositely arranged, the second groove section 1312 is connected to the first groove section 1311 and the third groove section 1313, and the fracture initiation positions 1314 are formed at the first groove section 1311 and/or the third groove section 1313.

The pressure relief component 13 in the battery cell 10 is a component for releasing the pressure in the battery cell 10. The end cover 12 of the shell 1 can be used as the pressure relief component 13; or at least a part of the case 11 of the shell 1 is used as the pressure relief component 13, for example, the shell 1 includes a plurality of wall portions, the plurality of wall portions jointly define an internal space of the shell 1, and at least one wall portion in the shell 1 serves as the pressure relief component 13. The pressure relief component 13 can also be a component independent of the case 11 and the end cover 12, for example, the pressure relief component 13 is a component mounted on the end cover 12; for another example, the pressure relief component 13 is a component mounted on the case 11. It is to be understood that if the end cover 12 serves as the pressure relief component 13, the groove portion 131 is arranged on the end cover 12; and if at least a part of the case 11 serves as the pressure relief component 13, the groove portion 131 is arranged on the case 11.

The groove portion 131 can be molded in various modes, such as stamping molding, milling molding, and etching molding. The first groove section 1311, the second groove section 1312 and the third groove section 1313 can be linear grooves extending along a linear track, and can also be nonlinear grooves extending along a nonlinear track, for example, arc grooves extending along an arc track. If the first groove section 1311, the second groove section 1312 and the third groove section 1313 are the linear grooves, the first groove section 1311 and the third groove section 1313 can be arranged in parallel and can also be arranged at a small angle, for example, an included angle between the first groove section 1311 and the third groove section 1313 is less than or equal to 10°. The first groove section 1311 and the second groove section 1312 can be vertically arranged, and can also be arranged by an acute angle or an obtuse angle; and the third groove section 1313 and the second groove section 1312 can be vertically arranged, and can also be arranged by an acute angle or an obtuse angle. In the groove portion 131, the groove portion 131 can only include the first groove section 1311, the second groove section 1312 and the third groove section 1313, and can also include other groove sections except the first groove section 1311, the second groove section 1312 and the third groove section 1313, for example, the groove portion 131 further includes a fourth groove section, and the fourth groove section is located between the first groove section 1311 and the third groove section 1313 and is connected to the second groove section 1312. The first groove section 1311 can be a one-stage groove or a multi-stage groove. If the first groove section 1311 is the multi-stage groove, the first groove section 1311 is a stepped groove, and the first groove section 1311 can be machined stage by stage in the thickness direction X of the pressure relief component during molding. The second groove section 1312 can be a one-stage groove or a multi-stage groove. If the second groove section 1312 is the multi-stage groove, the second groove section 1312 is a stepped groove, and the second groove section 1312 can be machined stage by stage in the thickness direction X of the pressure relief component during molding. The third groove section 1313 can be a one-stage groove or a multi-stage groove. If the third groove section 1313 is the multi-stage groove, the third groove section 1313 is a stepped groove, and the third groove section 1313 can be machined stage by stage in the thickness direction X of the pressure relief component during molding.

The second groove section 1312 is connected to the first groove section 1311 and the third groove section 1313, that is, two ends of the second groove section 1312 are respectively connected to the first groove section 1311 and the third groove section 1313, or at least one of the first groove section 1311 and the third groove section 1313 is connected to a position deviating from the end part of the second groove section 1312, so that at least one of the first groove section 1311 and the third groove section 1313 is positioned between the two ends of the second groove section 1312. The position where the first groove section 1311 and the second groove section 1312 are connected can be at one end of the first groove section 1311 and can also deviate from the two ends of the first groove section 1311. The position where the third groove section 1313 and the second groove section 1312 are connected can be at one end of the first groove section 1313 and can also deviate from the two ends of the third groove section 1313. The first groove section 1311, the second groove section 1312 and the third groove section 1313 can form various shapes, such as a U shape, an N shape, and an H shape.

The fracture initiation position 1314 is a position where the pressure relief component 13 firstly cracks when the pressure inside the battery cell 10 reaches the fracture initiation pressure. One or a plurality of the fracture initiation positions 1314 are formed in the groove portion 131. When the pressure relief component 13 performs pressure relief, the fracture initiation positions 1314 can be formed on the groove bottom surface of the first groove section 1311 and/or the groove bottom surface of the third groove section 1313. The fracture initiation position 1314 can be only formed at the first groove section 1311, or, the fracture initiation position 1314 can be only formed at the third groove section 1313, or, the fracture initiation positions 1314 can be formed at both the first groove section 1311 and the third groove section 1313. In an embodiment that the fracture initiation position 1314 is formed at the first groove section 1311, the fracture initiation position 1314 can be at any position of the first groove section 1311, for example, the fracture initiation position 1314 can be near the end part of the first groove section 1311, for another example, the fracture initiation position 1314 can be near the position where the first groove section 1311 and the second groove section 1312 are connected. Taking two ends of the second groove section 1312 being respectively connected to the first groove section 1311 and the third groove section 1313 as an example, as long as the minimum space between one end of the second groove section 1312 connected to the first groove section 1311 and the fracture initiation position 1314 is less than the width of the first groove section 1311 by observing in the thickness direction X of the pressure relief component, it is to be understood that the fracture initiation position 1314 is near the position where the first groove section 1311 and the second groove section 1312 are connected. In an embodiment that the fracture initiation position 1314 is formed at the third groove section 1313, the fracture initiation position 1314 can be at any position of the third groove section 1313, for example, the fracture initiation position 1314 can be near the end part of the third groove section 1313, for another example, the fracture initiation position 1314 can be near the position where the third groove section 1313 and the second groove section 1312 are connected. Taking two ends of the second groove section 1312 being respectively connected to the first groove section 1311 and the third groove section 1313 as an example, as long as the minimum space between one end of the second groove section 1312 connected to the third groove section 1313 and the fracture initiation position 1314 is less than the width of the third groove section 1313 by observing in the thickness direction X of the pressure relief component, it is to be understood that the fracture initiation position 1314 is near the position where the third groove section 1313 and the second groove section 1312 are connected.

In the embodiment of the present application, the fracture initiation positions 1314 of the pressure relief component 13 are only formed at the first groove section 1311 and/or the third groove section 1313, and no fracture initiation position 1314 is formed at the second groove section 1312, so that the pressure relief component 13 has high fatigue resistance in the area of the second groove section 1312, the possibility of the pressure relief component 13 cracking in the area of the second groove section 1312 during regular use of the battery cell 10 is reduced, the long-term reliability of the pressure relief component 13 is improved, and the service life of the battery cell 10 is prolonged.

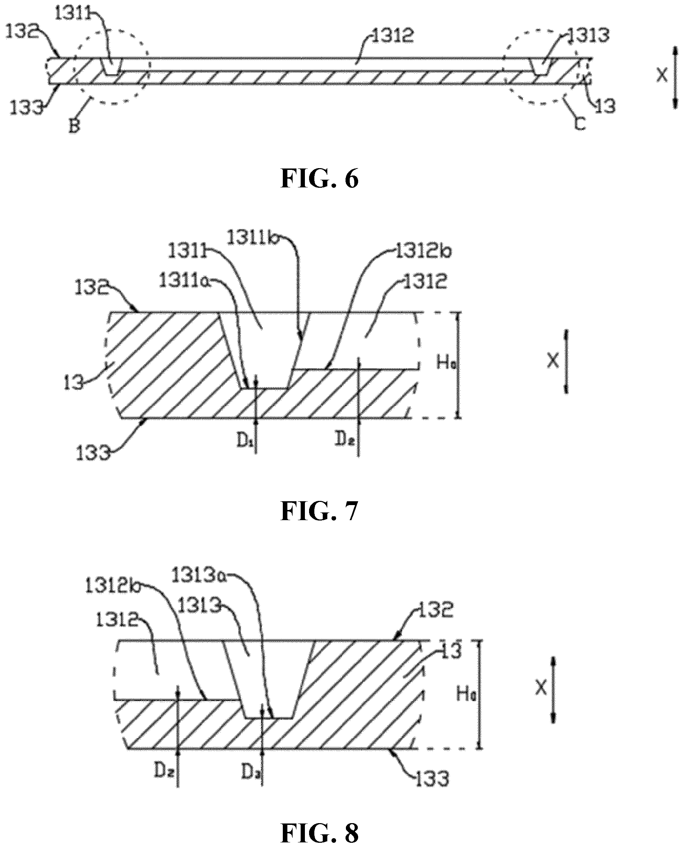

In some embodiments, with reference to FIG. 6 to FIG. 8, FIG. 6 is an A-A sectional view of a pressure relief component 13 in FIG. 5; FIG. 7 is a partial enlarged view of a part B in FIG. 6; and FIG. 8 is a partial enlarged view of a part C in FIG. 6. The fracture initiation position 1314 (shown in FIG. 5) is formed at the first groove section 1311, and the residual thickness of the first groove section 1311 is less than that of the second groove section 1312.

The residual thickness of the first groove section 1311 is the thickness of a residual part of the pressure relief component 13 after the first groove section 1311 is arranged, and the residual part can be the groove bottom wall of the first groove section 1311. The thickness of the groove bottom wall of the first groove section 1311 can be uniform or non-uniform. If the thickness of the groove bottom wall of the first groove section 1311 is non-uniform, the thickness of the thinnest position of the groove bottom wall of the first groove section 1311 is the residual thickness of the first groove section 1311. The residual thickness of the second groove section 1312 is the thickness of a residual part of the pressure relief component 13 after the second groove section 1312 is arranged, and the residual part can be the groove bottom wall of the second groove section 1312. The thickness of the groove bottom wall of the second groove section 1312 can be uniform or non-uniform. If the thickness of the groove bottom wall of the second groove section 1312 is non-uniform, the thickness of the thinnest position of the groove bottom wall of the second groove section 1312 is the residual thickness of the second groove section 1312.

As shown in FIG. 7 to FIG. 8, the residual thickness of the first groove section 1311 is D₁, the residual thickness of the second groove section 1312 is D₂, and the residual thickness of the third groove section 1313 is D₃, which meet: D₁<D₂. D₁ and ₃ can be equal or unequal.

In the embodiments, the residual thickness of the first groove section 1311 is less than that of the second groove section 1312, so that the fracture initiation position 1314 can be formed near the position where the second groove section 1312 and the first groove section 1311 are connected; and during pressure relief, after the pressure relief component 13 cracks at the fracture initiation position 1314, the cracks can also spread along the second groove section 1312 while spreading along the first groove section 1311. In addition, the residual thickness of the first groove section 1311 is less than that of the second groove section 1312, it is equivalent to the residual thickness of the second groove section 1312 being increased, so that the fatigue resistance of the pressure relief component 13 in the area where the second groove section 1312 is arranged is improved, and furthermore, the possibility of the pressure relief component 13 cracking in the area of the second groove section 1312 during regular use of the battery cell 10 is reduced. In addition, the stress at the position where the first groove section 1311 and the second groove section 1312 are connected is more concentrated, so that the fracture initiation position 1314 of the first groove section 1311 can be formed near the position where the first groove section 1311 and the second groove section 1312 are connected.

In some embodiments, the residual thickness of the first groove section 1311 is D₁, and the residual thickness of the second groove section 1312 is D₂, which meet: 0.15≤D₁/D₂≤0.95.

D₁/D₂ can be the point value of any one of 0.15, 0.2, 0.25, 0.3, 0.35, 0.4, 0.45, 0.5, 0.55, 0.6, 0.65, 0.7, 0.75, 0.8, 0.85, 0.9, and 0.95 or a range value between any two of the previous values.

The inventor carried out a plurality of experiments, D₂ of the battery cell 10 in different groups was different, and the explosion rate of each group of battery cells 10 during thermal runaway and the cracking rate of the pressure relief component 13 cracking along the second groove section 1312 during regular use of the battery cell 10 were measured, and the test results are shown in Table 1.

A method for measuring the residual thickness of the first groove section 1311 and the residual thickness of the third groove section 1313 includes: cutting the pressure relief component 13 into three sections, the cutting direction being vertical to the extending direction of the first groove section 1311; polishing the section of the middle section to fully remove burrs, and then placing on a three-dimensional coordinate measuring instrument; and measuring the residual thickness of the first groove section 1311 and the residual thickness of the third groove section 1313 on the section by means of the three-dimensional coordinate measuring instrument.

A method for measuring the residual thickness of the second groove section 1312 includes: cutting the middle section into three sections, the cutting direction being vertical to the extending direction of the second groove section 1312; polishing the section of the middle section in the three sections to fully remove burrs, and then placing on the three-dimensional coordinate measuring instrument; and measuring the residual thickness of the second groove section 1312 on the section by means of the three-dimensional coordinate measuring instrument.

A method for measuring the explosion rate of the battery cell 10 during thermal runaway includes: arranging a small heating film in the battery cell 10, electrifying the heating film to heat the battery cell 10 until the thermal runaway of the battery cell 10 occurs, and observing whether the battery cell 10 explodes or not. 1000 battery cells 10 are selected in each group of tests, the explosion rate of the battery cell 10 is counted by explosion rate Q₁= number of exploded battery cells 10/total number of battery cells 10 x 100%.

A method for measuring the cracking rate of the pressure relief component 13 cracking along the second groove section 1312 during regular use of the battery cell 10 includes: placing the battery cell 10 at 25±2°C, performing cyclic charging and discharging, the charging and discharging interval being 5%-97% SOC, performing 1000 groups of tests at the same time, observing whether the pressure relief component 13 cracks or not along the second groove section 1312 when the service life of the battery cell 10 is reduced to 80% SOH, and counting the cracking rate of the pressure relief component 13 cracking along the second groove section 1312, in which, cracking rate Q₂= number of cracked battery cells 10/total number of battery cell 10 x 100%.

**Table 1**

| No. | D₁ (mm) | D₂ (mm) | D₃ (mm) | D₁/D₂ | D₃/D₂ | Q₁ | Q₂ |
|---|---|---|---|---|---|---|---|
| 1 | 0.15 | 1.5 | 0.15 | 0.1 | 0.1 | 10% | 0.1% |
| 2 | 0.15 | 1 | 0.15 | 0.15 | 0.15 | 5% | 0.2% |
| 3 | 0.15 | 0.5 | 0.15 | 0.3 | 0.3 | 3.2% | 0.7% |
| 4 | 0.15 | 0.3 | 0.15 | 0.5 | 0.5 | 2.1% | 1.2% |
| 5 | 0.15 | 0.176 | 0.15 | 0.85 | 0.85 | 1.1% | 2.3% |
| 6 | 0.15 | 0.167 | 0.15 | 0.9 | 0.9 | 0.6% | 3.4% |
| 7 | 0.15 | 0.158 | 0.15 | 0.95 | 0.95 | 0.2% | 5.5% |
| 8 | 0.15 | 0.153 | 0.15 | 0.98 | 0.98 | 0.1% | 8.5% |

As shown in Table I, when D₁/D₂<0.15, the pressure relief timeliness is poor, and the possibility of explosion of the battery cell 10 during thermal runaway is relatively high; and when D₁/D₂>0.95, the possibility of the pressure relief component 13 cracking along the second groove section 1312 during regular use of the battery cell 10 is relatively high, which influences the service life of the battery cell 10. If 0.15≤D₁/D₂≤0.95, the pressure relief timeliness of the battery cell 10 can be improved, and the service life of the battery cell 10 can be prolonged.

In some embodiments, 0.3≤D₁/D₂≤0.9.

In the embodiments, D₁/D₂ can be the point value of any one of 0.3, 0.32, 0.35, 0.38, 0.4, 0.42, 0.45, 0.48, 0.5, 0.52, 0.55, 0.58, 0.6, 0.62, 0.65, 0.68, 0.7, 0.72, 0.75, 0.78, 0.8, 0.82, 0.85, 0.88, and 0.9 or a range value between any two of the previous values.

As shown in Table 1, when 0.3≤D₁/D₂≤0.9, the performance of the battery cell 10 is improved, and the pressure relief timeliness of the battery cell 10 and the service life of the battery cell 10 can be improved and prolonged.

In some embodiments, 0.5≤D₁/D₂≤0.85.

In the embodiments, D₁/D₂ can be the point value of any one of 0.5, 0.52, 0.53, 0.55, 0.57, 0.58, 0.59, 0.6, 0.62, 0.63, 0.65, 0.67, 0.68, 0.69, 0.7, 0.72, 0.73, 0.75, 0.77, 0.78, 0.79, 0.8, 0.82, 0.83, and 0.85 or a range value between any two of the previous values.

As shown in Table 1, when 0.5≤D₁/D₂≤0.85, the comprehensive performance of the battery cell 10 is further improved, the possibility of the pressure relief component 13 cracking along the second groove section 1312 during regular use of the battery cell 10 can be controlled at a relatively low level, and the possibility of the battery cell 10 exploding during thermal runaway can be controlled at a relatively low level.

In some embodiments, 0.03 mm≤D₁≤0.5mm.

In the embodiments, D₁ can be the point value of any one of 0.03 mm, 0.1 mm, 0.15 mm, 0.2 mm, 0.25 mm, 0.3 mm, 0.35 mm, 0.4 mm, 0.45 mm, and 0.5 mm or a range value between any two of the previous values.

In some embodiments, 0.15 mm≤D₁≤0.4mm.

In the embodiments, D₁ can be the point value of any one of 0.15 mm, 0.18 mm, 0.2 mm, 0.22 mm, 0.25 mm, 0.28 mm, 0.3 mm, 0.32 mm, 0.35 mm, 0.38 mm, and 0.4 mm or a range value between any two of the previous values.

In some embodiments, 0.05 mm≤D₂≤0.65mm.

In the embodiments, D₂ can be the point value of any one of 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, and 0.65 mm or a range value between any two of the previous values.

In some embodiments, 0.25 mm≤D₂≤0.5mm.

D₂ can be the point value of any one of 0.25 mm, 0.27 mm, 0.3 mm, 0.32 mm, 0.35 mm, 0.37 mm, 0.4 mm, 0.42 mm, 0.45 mm, 0.47 mm, and 0.5 mm or a range value between any two of the previous values.

In some embodiments, with reference to FIG. 7, the depth of the first groove section 1311 is larger than that of the second groove section 1312, so that the residual thickness of the first groove section 1311 is less than that of the second groove section 1312.

As an example, in the thickness direction X of the pressure relief component, the pressure relief component 13 includes a first surface 132 and a second surface 133 which are oppositely arranged; the first groove section 1311 and the second groove section 1312 are arranged on the first surface 132; the first surface 132 and the second surface 133 can be planes which are arranged in parallel; and the distance from the first surface 132 to the second surface 133 is H₀, the distance from the groove bottom surface (first groove bottom surface 1311a) of the first groove section 1311 to the second surface 133 is D₁, the distance from the groove bottom surface (second groove bottom surface 1312b) of the second groove section 1312 to the second surface 133 is D₂, the depth of the first groove section 1311 is H₀-D₁, and the depth of the second groove section 1312 is H₀-D₂, which meet: H₀-D₁>H₀-D₂. H₀ can be the thickness of the pressure relief component 13.

The first groove section 1311 can include the first groove bottom surface 1311a and two first groove side surfaces 1311b, the two first groove side surfaces 1311b are oppositely arranged in the width direction of the first groove section 1311, and the two first groove side surfaces 1311b are connected by means of the first groove bottom surface 1311a. The two first groove side surfaces 1311b can be arranged in parallel; and the two first groove side surfaces 1311b can also be arranged at an acute angle, for example, the distance between the two first groove side surfaces 1311b in the width direction of the first groove section 1311 gradually decreases in the depth direction of the first groove section 1311, so that the two first groove side surfaces 1311b are inclined surfaces. The first groove bottom surface 1311a can be a plane or an arc surface.

The second groove section 1312 can include the second groove bottom surface 1312b and two second groove side surfaces (not shown in FIG. 7), and the two second groove side surfaces are oppositely arranged in the width direction of the second groove section 1312 and are connected by means of the second groove bottom surface 1312b. The two second groove side surfaces can be arranged in parallel; and the two second groove side surfaces can also be arranged by an acute angle, for example, the distance between the two second groove side surfaces in the width direction of the second groove section 1312 gradually decreases in the depth direction of the second groove section 1312, so that the two second groove side surfaces are inclined surfaces. The second groove bottom surface 1312b can be a plane or an arc surface.

During molding, the first groove section 1311 can be processed deeper than the second groove section 1312 on the pressure relief component 13, so that the residual thickness of the first groove section 1311 is less than that of the second groove section 1312, and the implementation mode is simple.

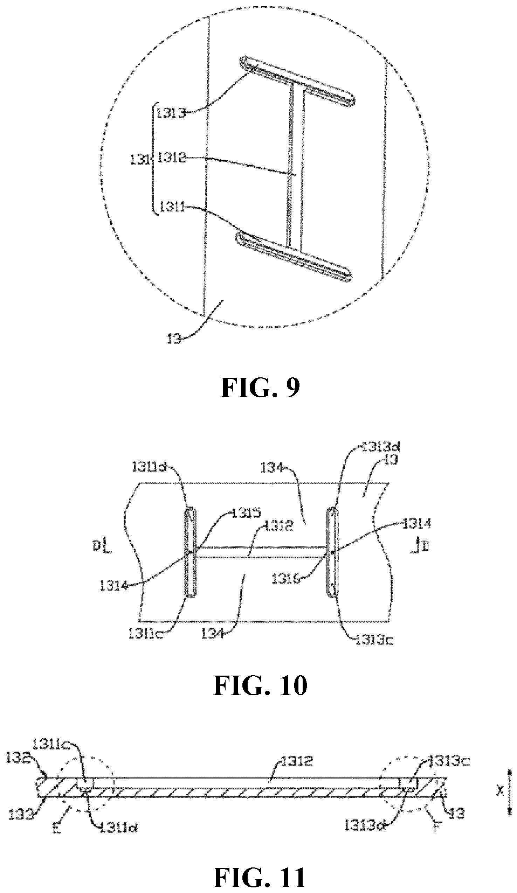

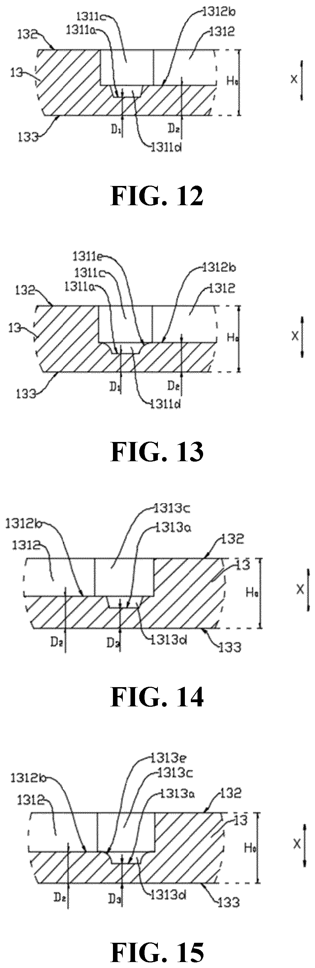

In some embodiments, with reference to FIG. 9 to FIG. 12, FIG. 9 is a partial enlarged view of a battery cell 10 provided by some other embodiments of the present application; FIG. 10 is partial view of a pressure relief component 13 in FIG. 9; FIG. 11 is a D-D sectional view of a pressure relief component 13 in FIG. 10; and FIG. 12 is a partial enlarged view of a part E in FIG. 11. The first groove section 1311 includes a first-stage groove 1311c and a second-stage groove 1311d which are distributed in the thickness direction X of the pressure relief component, and the second-stage groove 1311d is formed in the groove bottom surface of the first-stage groove 1311c.

The first groove section 1311 can be a two-stage groove, one is the first-stage groove 1311c, and the other one is the second-stage groove 1311d. The first-stage groove 1311c is consistent with the second-stage groove 1311d in extending direction, and the first-stage groove 1311c is consistent with the second-stage groove 1311d in width direction. If the first groove section 1311 is a groove extending along a linear track, the first-stage groove 1311c and the second-stage groove 1311d are both grooves extending along the linear track; and if the first groove section 1311 is a groove extending along an arc-shaped track, the first-stage groove 1311c and the second-stage groove 1311d are both grooves extending along the arc-shaped track. In the depth direction of the first groove section 1311, the second-stage groove 1311d is located at the bottom of the first-stage groove 1311c. The groove bottom wall of the second-stage groove 1311d is the groove bottom wall of the first groove section 1311, and the groove bottom surface of the second-stage groove 1311d is the groove bottom surface (first groove bottom surface 1311a) of the first groove section 1311. As an example, in the thickness direction X of the pressure relief component, the pressure relief component 13 is provided with the first surface 132 and the second surface 133 which are opposite to each other, the first-stage groove 1311c and the second-stage groove 1311d are sequentially arranged in the direction from the first surface 132 to the second surface 133, and the distance from the groove bottom surface of the second-stage groove 1311d to the second surface 133 is D₁.

The groove bottom surface of the first-stage groove 1311c can be flush with the groove bottom surface (second groove bottom surface 1312b) of the second-stage groove 1312, and can also be arranged in a staggered mode in the thickness direction X of the pressure relief component, for example, in the thickness direction X of the pressure relief component, the groove bottom surface of the first-stage groove 1311c is closer to the second surface 133 than the groove bottom surface (second groove bottom surface 1312b) of the second-stage groove 1312.

During molding, the first-stage groove 1311c can be molded in the pressure relief component 13, and then the second-stage groove 1311d is molded in the groove bottom surface of the first-stage groove 1311c so as to obtain the first groove section 1311, and therefore, the molding depth of each stage of groove in the first groove section 1311 can be reduced, the molding force applied to the pressure relief component 13 during molding the first groove section 1311 can be reduced, and the possibility of generating cracks by the pressure relief component 13 during molding the first groove section 1311 can be reduced.

In some embodiments, with reference to FIG. 12, the groove bottom surface of the first-stage groove 1311c is flush with the groove bottom surface (second groove bottom surface 1312b) of the second groove section 1312.

As an example, the groove bottom surface of the first-stage groove 1311c and the groove bottom surface (second groove bottom surface 1312b) of the second groove section 1312 are both planes and are located in the same plane.

In the embodiments, the groove bottom surface of the first-stage groove 1311c is flush with the groove bottom surface (second groove bottom surface 1312b) of the second groove section 1312, so that the groove bottom surface of the first-stage groove 1311c and the groove bottom surface (second groove bottom surface 1312b) of the second groove section 1312 are coplanar; and during molding, the first-stage groove 1311c of the first groove section 1311 and the second groove section 1312 can be molded together, and then the second-stage groove 1311d of the first groove section 1311 is molded, thus improving the molding efficiency of the groove portion 131.

In some embodiments, with reference to FIG. 13, FIG. 13 a partial sectional view of a pressure relief component 13 provided by some other embodiments of the present application. In the thickness direction X of the pressure relief component 13, the pressure relief component 13 is provided with the first surface 132 and the second surface 133 which are opposite to each other, the first-stage groove 1311c and the second-stage groove 1311d are sequentially arranged in the direction from the first surface 132 to the second surface 133, and the groove bottom surface (first groove bottom surface 1311a) of the second-stage groove 1311d is closer to the second surface 133 than the groove bottom surface (second groove bottom surface 1312b) of the second groove section 1312. The groove bottom surface (first groove bottom surface 1311a) of the second-stage groove 1311d and the groove bottom surface (second groove bottom surface 1312b) of the second groove section 1312 are connected by a first inclined plane (not shown in FIG. 13) or a first arc surface 1311e.

The groove bottom surface (first groove bottom surface 1311a) of the second-stage groove 1311d and the groove bottom surface (second groove bottom surface 1312b) of the second groove section 1312 can be connected by the first inclined plane and can also be connected by the first arc surface 1311e. In the embodiment shown in FIG. 13, the groove bottom surface (first groove bottom surface 1311a) of the second-stage groove 1311d and the groove bottom surface (second groove bottom surface 1312b) of the second groove section 1312 are connected by the first arc surface 1311e. As an example, the groove bottom surface (first groove bottom surface 1311a) of the second-stage groove 1311d is parallel to the groove bottom surface (second groove bottom surface 1312b) of the second groove section 1312, the first arc surface 1311e is tangent to the groove bottom surface (second groove bottom surface 1312b) of the second groove section 1312, and the first arc surface 1311e is one groove side surface of the second-stage groove 1311d.

During pressure relief, after the pressure relief component 13 cracks at the fracture initiation position 1314, the cracks in the groove bottom surface of the second-stage groove 1311d can quickly spread to the groove bottom surface of the second groove section 1312 along the first inclined plane or the first arc surface 1311e, so that the time for the cracks to spread from the first groove section 1311 to the second groove section 1312 is decreased, and furthermore, the time for the pressure relief component 13 to crack along the groove portion 131 is decreased.

In some embodiments, with reference to FIG. 8 and FIG. 14, FIG. 14 is a partial enlarged view of a part F of a pressure relief component 13 in FIG. 11. The fracture initiation position 1314 (shown in FIG. 5 and FIG. 10) is formed at the third groove section 1313, and the residual thickness of the third groove section 1313 is less than that of the second groove section 1312.

The residual thickness of the third groove section 1313 is the thickness of a residual part of the pressure relief component 13 after the third groove section 1313 is arranged, and the residual part can be the groove bottom wall of the third groove section 1313. The thickness of the groove bottom wall of the third groove section 1313 can be uniform or non-uniform. If the thickness of the groove bottom wall of the third groove section 1313 is non-uniform, the thickness of the thinnest position of the groove bottom wall of the third groove section 1313 is the residual thickness of the third groove section 1313.

The residual thickness of the second groove section 1312 is D₂, and the residual thickness of the third groove section 1313 is D₃, which meet: D₃<D₂.

In the embodiments, the residual thickness of the third groove section 1313 is less than that of the second groove section 1312, so that the fracture initiation position 1314 can be formed near the position where the second groove section 1312 and the third groove section 1313 are connected; and during pressure relief, after the pressure relief component 13 cracks at the fracture initiation position 1314, the cracks can spread along the second groove section 1312 while spreading along the third groove section 1313. The residual thickness of the third groove section 1313 is less than that of the second groove section 1312, it is equivalent to the residual thickness of the second groove section 1312 being increased, thus the fatigue resistance of the pressure relief component 13 in the area where the second groove section 1312 is arranged is improved, and the possibility of the pressure relief component 13 cracking in the area of the second groove section 1312 during regular use of the battery cell 10 is further reduced. In addition, as the fracture initiation positions 1314 are formed at both the first groove section 1311 and the third groove section 1313, when the pressure inside the battery cell 10 reaches the fracture initiation pressure, cracking can occur in the fracture initiation positions 1314 at both the first groove section 1311 and the third groove section 1313, thus the cracks spread from two ends of the second groove section 1312 to the middle position while spreading along the first groove section 1311 and the third groove section 1313, and the time for the pressure relief component 13 to crack along the groove portion 131 is decreased.

In some embodiments, the residual thickness of the third groove section 1313 is equal to that of the first groove section 1311.

It is to be understood: D₁=D₃. As an example, the depth of the first groove section 1311 is equal to that of the third groove section 1313, so that the residual thickness of the first groove section 1311 is equal to that of the third groove section 1313.

When the battery cell 10 is subjected to pressure relief, the pressure relief component 13 has better synchronism when cracking along the first groove section 1311 and the third groove section 1313, thus the time for the pressure relief component 13 to crack along the groove portion 131 is further shortened, and the pressure relief timeliness is improved.

In some embodiments, the residual thickness of the second groove section 1312 is D₂, and the residual thickness of the third groove section 1313 is D₃, which meet: 0.15≤D₃/D₂≤0.95.

D₃/D₂ can be the point value of any one of 0.15, 0.2, 0.25, 0.3, 0.35, 0.4, 0.45, 0.5, 0.55, 0.6, 0.65, 0.7, 0.75, 0.8, 0.85, 0.9, and 0.95 or a range value between any two of the previous values.

As shown in Table I, when D₃/D₂<0.15, the pressure relief timeliness is poor, and the possibility of explosion of the battery cell 10 during thermal runaway is relatively high; and when D₃/D₂>0.95, the possibility of the pressure relief component 13 cracking along the second groove section 1312 during regular use of the battery cell 10 is relatively high, which influences the service life of the battery cell 10. If 0.15≤D₃/D₂≤0.95, the pressure relief timeliness of the battery cell 10 can be improved, and the service life of the battery cell 10 can be prolonged.

In some embodiments, 0.3≤D₃/D₂≤0.9.

In the embodiments, D₃/D₂ can be the point value of any one of 0.3, 0.32, 0.35, 0.38, 0.4, 0.42, 0.45, 0.48, 0.5, 0.52, 0.55, 0.58, 0.6, 0.62, 0.65, 0.68, 0.7, 0.72, 0.75, 0.78, 0.8, 0.82, 0.85, 0.88, and 0.9 or a range value between any two of the previous values.

As shown in Table 1, when 0.3≤D₃D₂≤0.9, the performance of the battery cell 10 is improved, and the pressure relief timeliness of the battery cell 10 and the service life of the battery cell 10 can be improved and prolonged.

In some embodiments, 0.5≤D₃ D₂≤0.85.

In the embodiments, D₃/D₂ can be the point value of any one of 0.5, 0.52, 0.53, 0.55, 0.57, 0.58, 0.59, 0.6, 0.62, 0.63, 0.65, 0.67, 0.68, 0.69, 0.7, 0.72, 0.73, 0.75, 0.77, 0.78, 0.79, 0.8, 0.82, 0.83, and 0.85 or a range value between any two of the previous values.

As shown in Table 1, when 0.5≤D₃/D₂≤0.85, the comprehensive performance of the battery cell 10 is further improved, the possibility of the pressure relief component 13 cracking along the second groove section 1312 during regular use of the battery cell 10 can be controlled at a relatively low level, and the possibility of the battery cell 10 exploding during thermal runaway can be controlled at a relatively low level.

In some embodiments, 0.03 mm≤D₃≤0.5mm.

In the embodiments, D₃ can be the point value of any one of 0.03 mm, 0.1 mm, 0.15 mm, 0.2 mm, 0.25 mm, 0.3 mm, 0.35 mm, 0.4 mm, 0.45 mm, and 0.5 mm or a range value between any two of the previous values.

In some embodiments, 0.15 mm≤D₃≤0.4mm.

In the embodiments, D₃ can be the point value of any one of 0.15 mm, 0.18 mm, 0.2 mm, 0.22 mm, 0.25 mm, 0.28 mm, 0.3 mm, 0.32 mm, 0.35 mm, 0.38 mm, and 0.4 mm or a range value between any two of the previous values.

In some embodiments, the depth of the third groove section 1313 is larger than that of the second groove section 1312, so that the residual thickness of the third groove section 1313 is less than that of the second groove section 1312.

As an example, in the thickness direction X of the pressure relief component, the pressure relief component 13 includes the first surface 132 and the second surface 133 which are oppositely arranged, the first groove section 1311 and the second groove section 1312 are arranged on the first surface 132, and the first surface 132 and the second surface 133 can be planes which are arranged in parallel; the distance from the first surface 132 to the second surface 133 is H₀, the distance from the groove bottom surface (third groove bottom surface 1313a) of the third groove section 1313 to the second surface 133 is D₃, the distance from the groove bottom surface (second groove bottom surface 1312b) of the second groove section 1312 to the second surface 133 is D₂, the depth of the third groove section 1313 is H₀-D₃, and the depth of the second groove section 1312 is H₀-D₂, which meet: H₀-D₃>H₀-D₂. H₀ can be the thickness of the pressure relief component 13. The third groove bottom surface 1313a can be a plane or an arc surface.

During molding, the third groove section 1313 can be processed deeper than the second groove section 1312 on the pressure relief component 13, so that the residual thickness of the third groove section 1313 is less than that of the second groove section 1312, and the implementation mode is simple.

In some embodiments, with reference to FIG. 14, the third groove section 1313 includes a third-stage groove 1313c and a fourth-stage groove 1313d which are distributed in the thickness direction X of the pressure relief component, and the fourth-stage groove 1313d is formed in the groove bottom surface of the third-stage groove 1313c.

The third groove section 1313 can be a two-stage groove, one is the third-stage groove 1313c, and the other one is the fourth-stage groove 1313d; the third-stage groove 1313c is consistent with the fourth-stage groove 1313d in extending direction, and the third-stage groove 1313c is consistent with the fourth-stage groove 1313d in width direction. If the third groove section 1313 is a groove extending along a linear track, the third-stage groove 1313c and the fourth-stage groove 1313d are both grooves extending along the linear track; and if the third groove section 1313 is a groove extending along an arc-shaped track, the third-stage groove 1313c and the fourth-stage groove 1313d are both grooves extending along the arc-shaped track. In the depth direction of the third groove section 1313, the fourth-stage groove 1313d is located at the bottom of the third-stage groove 1313c. The groove bottom wall of the fourth-stage groove 1313d is the groove bottom wall of the third groove section 1313, and the groove bottom surface of the fourth-stage groove 1313d is the groove bottom surface (third groove bottom surface 1313a) of the third groove section 1313. As an example, in the thickness direction X of the pressure relief component, the pressure relief component 13 is provided with the first surface 132 and the second surface 133 which are opposite to each other, the third-stage groove 1313c and the fourth-stage groove 1313d are sequentially arranged in the direction from the first surface 132 to the second surface 133, and the distance from the groove bottom surface of the fourth-stage groove 1313d to the second surface 133 is D₃.

The groove bottom surface of the third-stage groove 1313c can be flush with the groove bottom surface (second groove bottom surface 1312b) of the second groove section 1312, and can also be arranged in a staggered mode in the thickness direction X of the pressure relief component, for example, in the thickness direction X of the pressure relief component, the groove bottom surface of the third-stage groove 1313c is closer to the second surface 133 than the groove bottom surface (second groove bottom surface 1312b) of the second groove section 1312.

During molding, the third-stage groove 1313c can be molded in the pressure relief component 13, and then the fourth-stage groove 1313d is molded in the groove bottom surface of the third-stage groove 1313c so as to obtain the third groove section 1313, so that the molding depth of each stage of the groove in the third groove section 1313 can be reduced, the molding force applied to the pressure relief component 13 during molding the third groove section 1313 is reduced, and the possibility of generating the cracks by the pressure relief component 13 during molding the third groove section 1313 is reduced.

In some embodiments, the groove bottom surface of the third-stage groove 1313c is flush with the groove bottom surface (second groove bottom surface 1312b) of the second groove section 1312.

As an example, the groove bottom surface of the third-stage groove 1313c and the groove bottom surface (second groove bottom surface 1312b) of the second groove section 1312 are both planes and are located in the same plane.

In the embodiments, the groove bottom surface of the third-stage groove 1313c is flush with the groove bottom surface (second groove bottom surface 1312b) of the second groove section 1312, so that the groove bottom surface of the third-stage groove 1313c and the groove bottom surface (second groove bottom surface 1312b) of the second groove section 1312 are coplanar; and during molding, the third-stage groove 1313c of the third groove section 1313 and the second groove section 1312 can be molded together, and then the fourth-stage groove 1313d of the third groove section 1313 is molded, thus improving the forming efficiency of the groove portion 131.

In some embodiments, with reference to FIG. 15, FIG. 15 is a partial sectional view of a pressure relief component 13 provided by yet other embodiments of the present application; in the thickness direction X of the pressure relief component, the pressure relief component 13 is provided with the first surface 132 and the second surface 133 which are oppositely to each other, the third-stage groove 1313c and the fourth-stage groove 1313d are sequentially arranged in the direction from the first surface 132 to the second surface 133, and the groove bottom surface of the fourth-stage groove 1313d is closer to the second surface 133 than the groove bottom surface of the second groove section 1312. The groove bottom surface (third groove bottom surface 1313a) of the fourth-stage groove 1313d is connected to the groove bottom surface (second groove bottom surface 1312b) of the second groove section 1312 by a second inclined plane or a second arc surface 1313e.

The groove bottom surface (third groove bottom surface 1313a) of the fourth-stage groove 1313d and the groove bottom surface (second groove bottom surface 1312b) of the second groove section 1312 can be connected through the second inclined plane or the second arc surface 1313e. In the embodiment shown in FIG. 14, the groove bottom surface (third groove bottom surface 1313a) of the fourth-stage groove 1313d and the groove bottom surface (second groove bottom surface 1312b) of the second groove section 1312 are connected by the second arc surface 1313e. As an example, the groove bottom surface (third groove bottom surface 1313a) of the fourth-stage groove 1313d is parallel to the groove bottom surface (second groove bottom surface 1312b) of the second groove section 1312, the second arc surface 1313e is tangent to the groove bottom surface (second groove bottom surface 1312b) of the second groove section 1312, and the second arc surface 1313e is one groove side surface of the fourth-stage groove 1313d.

During pressure relief, after the pressure relief component 13 cracks at the fracture initiation position 1314, the cracks in the groove bottom surface of the fourth-stage groove 1313d can quickly spread to the groove bottom surface of the second groove section 1312 along the second inclined plane or the second arc surface 1313e, so that the time for the cracks to spread from the third groove section 1313 to the second groove section 1312 is decreased, and furthermore, the time for the pressure relief component 13 to crack along the groove portion 131 is decreased.

In some embodiments, with reference to FIG. 5, FIG. 10 and FIG. 16, FIG. 16 is a partial view of a pressure relief component 13 provided by some other embodiments of the present application. In the extending direction of the second groove section 1312, two ends of the second groove section 1312 are connected to the first groove section 1311 and the third groove section 1313 respectively.

In the extending direction of the second groove section 1312, one end of the second groove section 1312 is connected to the first groove section 1311 at a first position 1315, and the other end of the second groove section 1312 and the third groove section 1313 are connected at a second position 1316. As an example, the fracture initiation position 1314 at the first groove section 1311 is near the first position 1315, and the fracture initiation position 1314 at the third groove section 1313 is near the second position 1316.

In the embodiments, the two ends of the second groove section 1312 are respectively connected to the first groove section 1311 and the third groove section 1313, so that the two ends of the second groove section 1312 do not extend over the first groove section 1311 and the third groove section 1313 respectively; in the pressure relief process, pressure can be accurately released through the region defined by the first groove section 1311, the second groove section 1312 and the third groove section 1313, and other regions on the pressure relief component 13 are not easy to crack for pressure relief, so directional pressure relief is easier to realize.

In some embodiments, the first groove section 1311 and the second groove section 1312 are connected to the first position 1315, and the first position 1315 deviates from the two ends of the first groove section 1311 in the extending direction of the first groove section 1311.

The first position 1315 deviates from the two ends of the first groove section 1311, namely, the first position 1315 is not located at any one of the two ends of the first groove section 1311, and the first position 1315 is located between the two ends of the first groove section 1311 in the extending direction of the first groove section 1311. The first position 1315 can be at the midpoint position of the first groove section 1311 and can also deviate from the midpoint position of the first groove section 1311.

In the pressure relief process, after the pressure relief component 13 cracks in the first position 1315, the cracks can spread from the first position 1315 to the two ends along the first groove section 1311, and thus the time for the pressure relief component 13 to crack along the first groove section 1311 is decreased.

In some embodiments, in the extending direction of the first groove section 1311, the first position 1315 is at the midpoint position of the first groove section 1311.

In the extending direction of the first groove section 1311, the first position 1315 can divide the first groove section 1311 into two parts, and the two parts have the same length.

As an example, in the extending direction of the first groove section 1311, the fracture initiation position 1314 at the first groove section 1311 is at the midpoint position of the first groove section 1311.

It is to be noted that in an embodiment that the first groove section 1311 includes the first-stage groove 1311c and the second-stage groove 1311d, in the extending direction of the first groove section 1311, the two ends of the first-stage groove 1311c are the two ends of the first groove section 1311, and the midpoint position of the first-stage groove 1311c is the midpoint position of the first groove section 1311.

In this embodiment, the first position 1315 is at the midpoint position of the first groove section 1311; and in the pressure relief process, the cracks spread by same distance from the first position 1315 to the two ends along the first groove section 1311, and thus the time for the pressure relief component 13 to crack along the first groove section 1311 is further decreased.

In some embodiments, the third groove section 1313 and the second groove section 1312 are connected at the second position 1316, and the second position 1316 deviates from the two ends of the third groove section 1313 in the extending direction of the third groove section 1313.

The second position 1316 deviates from the two ends of the third groove section 1313, namely, the second position 1316 is not positioned at any one of the two ends of the third groove section 1313, and the second position 1316 is between the two ends of the third groove section 1313 in the extending direction of the third groove section 1313. The second position 1316 can be at the midpoint position of the third groove section 1313, or can deviate from the midpoint position of the third groove section 1313.

Under the condition that the first position 1315 deviates from the two ends of the first groove section 1311 and the second position 1316 deviates from the two ends of the third groove section 1313, the first groove section 1311, the second groove section 1312 and the third groove section 1313 jointly define two pressure relief regions 134, the two pressure relief regions 134 are positioned on the two sides of the second groove section 1312 and can be opened in the pressure relief process, so that the pressure relief timeliness can be effectively improved.

In the pressure relief process, after the pressure relief component 13 cracks at the first position 1316, the cracks can spread from the second position 1316 to the two ends along the third groove section 1313, and thus the time for the pressure relief component 13 to crack along the third groove section 1313 is decreased.

In some embodiments, in the extending direction of the third groove section 1313, the second position 1316 is at the midpoint position of the third groove section 1313.

In the extending direction of the third groove section 1313, the second position 1316 can divide the third groove section 1313 into two parts, and the two parts have the same length.

As an example, in the extending direction of the third groove section 1313, the fracture initiation position 1314 at the third groove section 1313 is at the midpoint position of the third groove section 1313.

It is to be noted that in the embodiment that the third groove section 1313 includes the third-stage groove 1313c and the fourth-stage groove 1313d, in the extending direction of the third groove section 1313, the two ends of the third-stage groove 1313c are the two ends of the third groove section 1313, and the midpoint position of the third-stage groove 1313c is the midpoint position of the third groove section 1313.

In this embodiment, the second position 1316 is at the midpoint position of the third groove section 1313; and in the pressure relief process, the cracks spread by same distance from the second position 1316 to the two ends along the third groove section 1313, and thus the time for the pressure relief component 13 to crack along the third groove section 1313 is further decreased.

In some embodiments, the first groove section 1311, the second groove section 1312 and the third groove section 1313 are all grooves extending along the linear track.

The first groove section 1311, the second groove section 1312 and the third groove section 1313 are all linear grooves. The first groove section 1311 and the second groove section 1312 can be arranged vertically, and can also be arranged by an acute angle or an obtuse angle. The third groove section 1313 and the second groove section 1312 can be arranged vertically, and can also be arranged by an acute angle or an obtuse angle. The length of the first groove section 1311 and the third groove section 1313 can be equal or unequal. In the embodiments shown in FIG. 5, FIG. 10 and FIG. 16, the length of the first groove section 1311 is equal to that of the third groove section 1313. In the embodiments shown in FIG. 10 and FIG. 15, the length of the first-stage groove 1311c is the length of the first groove section 1311, and the length of the third-stage groove 1313c is the length of the third groove section 1313. As an example, the length of the first-stage groove 1311c is equal to that of the third-stage groove 1313c, and the length of the second-stage groove 1311d is equal to that of the fourth-stage groove 1313d.

In the embodiments, the first groove section 1311, the second groove section 1312 and the third groove section 1313 are all linear grooves, so that the difficulty in molding of the first groove section 1311, the second groove section 1312 and the third groove section 1313 can be reduced.

In some embodiments, the first groove section 1311 is vertical to the second groove section 1312; and/or, the third groove section 1313 is vertical to the second groove section 1312.

It is to be understood that under the condition that the first groove section 1311 is vertical to the second groove section 1312, the third groove section 1313 can be vertical to the second groove section 1312, and the third groove section 1313 and the second groove section 1312 can also be arranged by an acute angle or an obtuse angle; and under the condition that the third groove section 1313 is vertical to the second groove section 1312, the first groove section 1311 can be vertical to the second groove section 1312, and the first groove section 1311 and the second groove section 1312 can also be arranged by an acute angle or an obtuse angle. In the embodiments shown in FIG. 5, FIG. 16 and FIG. 10, the first groove section 1311 and the third groove section 1313 are both vertical to the second groove section 1312.

If the first groove section 1311 is vertical to the second groove section 1312, the stress near the position where the first groove section 1311 and the second groove section 1312 are connected is more concentrated; and if the fracture initiation position 1314 is near the position where the first groove section 1311 and the second groove section 1312 are connected, under the condition that the fracture initiation pressure of the battery cell 10 is constant, the machining depth of the first groove section 1311 can be reduced, and thus the difficulty in machining the first groove section 1311 can be reduced. If the third groove section 1313 is vertical to the second groove section 1312, the stress near the position where the third groove section 1313 and the second groove section 1312 are connected is more concentrated; and if the fracture initiation position 1314 is near the position where the third groove section 1313 and the second groove section 1312 are connected, and under the condition that the fracture initiation pressure of the battery cell 10 is constant, the machining depth of the third groove section 1313 can be reduced, the difficulty in machining the third groove section 1313 can be reduced.

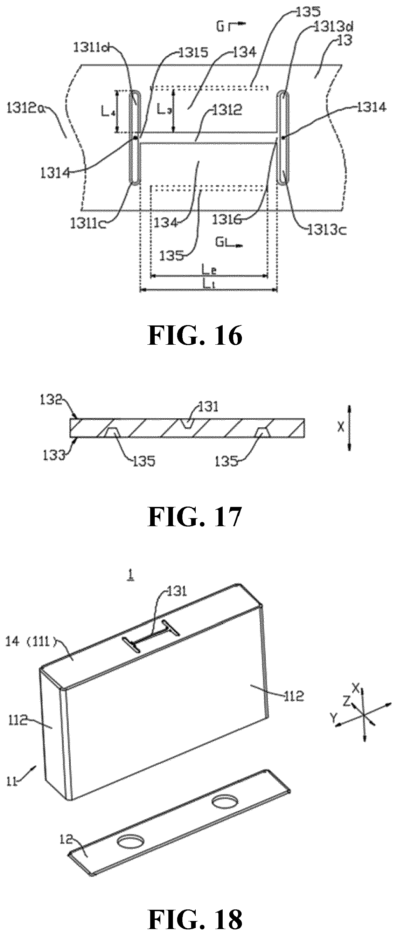

In some embodiments, with reference to FIG. 16, the first groove section 1311, the second groove section 1312 and the third groove section 1313 define a pressure relief region 134. The pressure relief component 13 is provided with a guide groove 135, the guide groove 135 and the second groove section 1312 are arranged at intervals, and the guide groove 135 is configured to guide the pressure relief region 134 to be turned over and opened.

The pressure relief region 134 is a region defined by the first groove section 1311, the second groove section 1312 and the third groove section 1313 of the pressure relief component 13, the first groove section 1311, the second groove section 1312 and the third groove section 1313 are located at the edge of the pressure relief region 134, and the pressure relief region 134 can be turned over outwards and opened in the process that the pressure relief component 13 cracks along the first groove section 1311, the second groove section 1312 and the third groove section 1313. The first groove section 1311, the second groove section 1312 and the third groove section 1313 can define one pressure relief region 134, for example, the first groove section 1311, the second groove section 1312 and the third groove section 1313 are sequentially connected to form a U-shaped structure; and the first groove section 1311, the second groove section 1312 and the third groove section 1313 can also define two pressure relief regions 134, for example, the first groove section 1311, the second groove section 1312 and the third groove section 1313 form an H-shaped structure.

In an embodiment that the first groove section 1311, the second groove section 1312 and the third groove section 1313 are sequentially connected to form the U-shaped structure, a connecting line between one end of the first groove section 1311 far away from the second groove section 1312 and one end of the third groove section 1313 far away from the second groove section 1312 is a first connecting line, and the region defined by the first groove section 1311, the second groove section 1312, the third groove section 1313 and the first connecting line is the pressure relief region 134. In an embodiment that the first groove section 1311, the second groove section 1312 and the third groove section 1313 form the H-shaped structure, the connecting line between one end of the first groove section 1311 and one end of the third groove section 1313 is a second connecting line, the connecting line between the other end of the first groove section 1311 and the other end of the third groove section 1313 is a third connecting line, the region defined by the first groove section 1311, the second groove section 1312, the third groove section 1313 and the second connecting line is one pressure relief region 134, and the region defined by the first groove section 1311, the second groove section 1312, the third groove section 1313 and the third connecting line is the other pressure relief region 134.

The guide groove 135 is a groove which is formed in a pressure relief component 13 and is beneficial to turning over and opening of the pressure relief region 134, and the guide groove 135 can be a linear groove or a non-linear groove, such as an arc-shaped groove. As an example, the guide groove 135 is the linear groove parallel to the second groove section 1312.

As an example, the residual thickness of the first groove section 1311 and the residual thickness of the third groove section 1313 are both less than the residual thickness of the guide groove 135.

In the embodiments, the arranged guide groove 135 is beneficial to turning over and opening of the pressure relief region 134, so that the difficulty in turning over of the pressure relief region 134 is reduced, and the pressure relief timeliness can be effectively improved.

In some embodiments, with reference to FIG. 16, the first groove section 1311, the second groove section 1312 and the third groove section 1313 define two pressure relief regions 134, and the two pressure relief regions 134 are respectively on the two sides of the second groove section 1312. The pressure relief component 13 is provided with two guide grooves 135, the second groove section 1312 is positioned between the two guide grooves 135, and the two guide grooves 135 are configured to respectively guide the two pressure relief regions 134 to be turned over and opened.

The area of the two pressure relief regions 134 can be equal or unequal. As an example, the two pressure relief regions 134 are symmetrically distributed on the two sides of the second groove section 1312. In embodiment shown in FIG. 16, the first groove section 1311, the second groove section 1312 and the third groove section 1313 are all linear grooves, the first groove section 1311 is parallel to the third groove section 1313, the first groove section 1311 is vertical to the second groove section 1312, the length of the first groove section 1311 is equal to that of the third groove section 1313, and the second groove section 1312 is connected to the midpoint position of the first groove section 1311 and the midpoint position of the third groove section 1313, so that the two pressure relief regions 134 are symmetrically distributed on the two sides of the second groove section 1312.

As an example, the two guide grooves 135 are parallel to the second groove section 1312, the space between the two guide grooves 135 and the second groove section 1312 can be equal, and the two guide grooves 135 are symmetrically distributed on the two sides of the second groove section 1312.

In the pressure relief process, the two guide grooves 135 can respectively play a role in guiding the two pressure relief regions 134, so that the opening rate of the two pressure relief regions 134 is increased, and pressure relief is more timely.

In some embodiments, the first groove section 1311 and the third groove section 1313 are both not in contact with the guide grooves 135.

The first groove section 1311 is not in contact with the guide grooves 135, namely, the first groove section 1311 is not connected to the guide grooves 135. The first groove section 1311 and the guide grooves 135 can be arranged at intervals, so that the first groove section 1311 and the guide grooves 135 are not in contact, for example, the first groove section 1311 and the guide grooves 135 are arranged at intervals in the extending direction of the first groove section 1311; and/or, the first groove section 1311 and the guide grooves 135 are arranged at intervals in the extending direction of the guide grooves 135; and/or, the first groove section 1311 and the guide grooves 135 are arranged at intervals in the thickness direction X of the pressure relief component. The third groove section 1313 is not in contact with the guide grooves 135, namely, the third groove section 1313 is not connected to the guide grooves 135. The third groove section 1313 and the guide grooves 135 can be arranged at intervals, so that the third groove section 1313 and the guide grooves 135 are not in contact, for example, the third groove section 1313 and the guide grooves 135 are arranged at intervals in the extending direction of the third groove section 1313; and/or, the third groove section 1313 and the guide grooves 135 are arranged at intervals in the extending direction of the guide grooves 135; and/or, the third groove section 1313 and the guide grooves 135 are arranged at intervals in the thickness direction X of the pressure relief component.

In the embodiments, the first groove section 1311 and the third groove section 1313 are not in contact with the guide grooves 135, so the guide grooves 135 are not easy to affect the first groove section 1311 and the third groove section 1313, the anti-fatigue strength of the pressure relief component 13 at the first groove section 1311 and the third groove section 1313 can be improved, and the possibility of the pressure relief component 13 cracking at the connecting position during regular use of the battery cell 10 due to stress concentration generated by the connection of the guide grooves 135 with the first groove section 1311 and the third groove section 1313 is reduced. In addition, in the pressure relief process, after the pressure relief component 13 cracks along the first groove section 1311 and the third groove section 1313, the cracks are not easy to spread to the guide groove 135, and thus the possibility of the pressure relief region 134 separating and flashing from the pressure relief component 13 after being opened is reduced.

In some embodiments, with reference to FIG. 17, FIG. 17 is a G-G cross-sectional view of a pressure relief component 13 shown in FIG. 16. In the thickness direction X of the pressure relief component, the guide groove 135 and the groove portion 131 are respectively formed in two sides of the pressure relief component 13.

During molding, in the thickness direction X of the pressure relief component, the guide groove 135 can be molded in one side of the pressure relief component 13, and then the groove portion 131 is molded in the other side of the pressure relief component 13. In some embodiments, the groove portion 131 faces the outside of the shell 1, and the guide groove 135 faces the inside of the shell 1. In some other embodiments, the groove portion 131 faces the inside of the shell 1, and the guide groove 135 faces the outside of the shell 1.

As an example, in the thickness direction X of the pressure relief component, the pressure relief component 13 includes the first surface 132 and the second surface 133 which are oppositely arranged, that is, the groove portion 131 can be formed in the first surface 132, and the guide groove 135 can be formed in the second surface 133. It is to be understood that the first groove section 1311, the second groove section 1312 and the third groove section 1313 are all arranged on the first surface 132.

In the embodiments, the guide groove 135 and the groove portion 131 are respectively formed in two sides of the pressure relief component 13, so that on one hand, the influence of the guide groove 135 on the groove portion 131 during molding is reduced; and on the other hand, the guide groove 135 can play a good role in guiding the pressure relief region 134 to make the pressure relief region 134 easier to be turned over and opened.

In some embodiments, with reference to FIG. 16, the guide groove 135 extends in the extending direction of the second groove section 1312.

It is to be understood that the extending directions of the guide grooves 135 are consistent with the extending direction of the second groove section 1312. In some embodiments, the guide grooves 135 and the second groove section 1312 are grooves extending along an arc track, and the circle center of the arc-shaped track of the guide grooves 135 is overlapped with the circle center of the arc-shaped track of the second groove section 1312 when observed in the thickness direction X of the pressure relief component. In some other embodiments, as shown in FIG. 16, the guide grooves 135 and the second groove section 1312 are grooves extending along a linear track, and the guide grooves 135 are parallel to the second groove section 1312.

In some embodiments, in the extending direction of the second groove section 1312, the first groove section 1311 and the third groove section 1313 are located at two sides of the guide grooves 135 respectively, the length of the part of the second groove section 1312 between the first groove section 1311 and the third groove section 1313 is L₁, and the length of the guide grooves 135 is L₂, which meet: 1mm≤L₁-L₂≤10mm.

In the extending direction of the second groove section 1312, one end of each guide groove 135 and the first groove section 1311 are arranged at an interval, and there is a distance between the two; the other end of each guide groove 135 and the third groove section 1313 are arranged at an interval, and there is a distance between the two. As an example, in the extending direction of the second groove section 1312, the space between one end of each guide groove 135 and the first groove section 1311 is equal to the space between the other end of each guide groove 135 and the third groove section 1313.

L₁-L₂ can be the point value of any one of 1 mm, 2 mm, 3 mm, 4 mm, 5 mm, 6 mm, 7 mm, 8 mm, 9 mm, and 10 mm or a range value between any two of the previous values.

If L₁-L₂<1mm, the space between at least one of the first groove section 1311 and the third groove and the guide groove 135 is small, and the guide groove 135 has a large influence on the first groove section 1311 and the third groove section 1313, so that the possibility of the pressure relief component 13 cracking in advance at the position of the first groove section 1311 or the third groove section 1313 close to the guide grooves 135 is easily caused, which increases the possibility of pressure relief occurring in advance. If L₁-L₂>10mm, the length of the guide grooves 135 is small, and the guide grooves 135 have a poor capability of assisting in the turning over of the pressure relief region 134. However, if 1mm≤L₁-L₂≤10mm, the possibility of pressure relief in advance of the pressure relief component 13 can be reduced, and the guiding capability of the guide groove 135 in assisting the pressure relief region 134 to turn over and open can be improved.

In some embodiments, 2mm≤L₁-L₂≤6mm.

In the embodiments, L₁- L₂ can be the point value of any one of 2 mm, 2.3 mm, 2.5 mm, 2.8 mm, 3 mm, 3.3 mm, 3.5 mm, 3.8 mm, 4 mm, 4.3 mm, 4.5 mm, 4.8 mm, 5 mm, 5.3 mm, 5.5 mm, 5.8 mm, and 6 mm or a range value between any two of the previous values.

In the embodiments, 2mm≤L₁-L₂≤6mm, so the possibility of pressure relief in advance of the pressure relief component 13 is further reduced, and the guiding capability of the guide groove 135 in assisting the pressure relief region 134 to turn over and open is further improved.

In some embodiments, in the extending direction of the first groove section 1311, the space between the guide groove 135 and the second groove section 1312 is L₃, and the length of the part, extending from the second groove section 1312 to the guide groove 135, of the first groove section 1311 is L₄, which meet: 0.5mm≤|L₃-L₄|≤15mm.

The space between the guide grooves 135 and the second groove section 1312 is equal to the length of the shortest line connecting the guide grooves 135 to the second groove section 1312, and the shortest line is consistent with the first groove section 1311 in extending direction.

It can be L₃>L₄, or L₄>L₃. In an embodiment of L₃>L₄, the guide grooves 135 are more beneficial to turning over and opening of the pressure relief region 134.

|L₃-L₄| can be the point value of any one of 0.5 mm, 1 mm, 2 mm, 3 mm, 4 mm, 5 mm, 6 mm, 7 mm, 8 mm, 9 mm, 10 mm, 11 mm, 12 mm, 13 mm, 14 mm, and 15 mm or a range value between any two of the previous values.

If |L₃-L₄|<0.5mm, the distance from the end part of the first groove section 1311 to the guide grooves 135 is small, and when the cracks of the pressure relief component 13 spread to the end part of the first groove section 1311 along the first groove section 1311, the cracks will be easy to spread to the guide groove 135 to make the pressure relief region 134 separate; if |L₃-L₄|>15mm, under the condition of L₃>L₄, the space between the guide grooves 135 and the second groove section 1312 is large, so the capability of the guide grooves 135 in assisting the turning over of the pressure relief region 134 is poor; and under the condition of L₃<L₄, the space between the guide groove 135 and the second groove section 1312 is small, and the turning over and opening area of the pressure relief region 134 is small, so the pressure relief area of the pressure relief region 134 is reduced. If 0.5mm≤|L₃-L₄|≤15mm, the possibility of separation and splashing of the pressure relief region 134 is reduced, moreover, the difficulty in turning over and opening of the pressure relief region 134 can be increased, and the opening area of the pressure relief region 134 is increased.

In some embodiments, 1mm≤|L₃-L₄|≤10mm.

In the embodiments, |L₃-L₄| can be the point value of any one of 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, and 10 mm or a range value between any two of the previous values.

In some embodiments, with reference to FIG. 18, FIG. 18 is an exploded view of a shell 1 provided by some embodiments of the present application. The shell 1 includes a first wall portion 14, and the pressure relief component 13 (not shown in FIG. 18) serves as the first wall portion 14.

The shell 1 can include a plurality of wall portions, and the plurality of wall portions jointly define an internal space of the shell 1. Taking the shell 1 being a cuboid as an example, there are six wall portions in the shell 1, the shell 1 has two opposite wall portions in the length direction, two opposite wall portions in the width direction and two opposite wall portions in the height direction.

In the shell 1, at least one wall portion serves as the first wall portion 14, namely, at least one first wall portion is provided with the groove portion 131. Taking the shell 1 including the case 11 and the end cover 12 as an example, the wall cover 12 serves as one wall portion in the shell 1, namely, the end wall 12 serves as the first wall portion 14, or at least one wall portion in the case 11 serves as the first wall portion 14.

It is to be understood that the groove portion 131 is formed in the first wall portion 14. The groove portion 131 can face the inside of the shell 1, or face the inside of the shell 1.

In the embodiments, the first wall portion 14 serves as the pressure relief component 13, the groove portion 131 can be directly molded in the first wall portion 14 to form an integrated pressure relief structure, so the reliability is improved, the process of mounting the pressure relief component 13 is omitted, and the production cost for the battery cell 10 can be reduced.

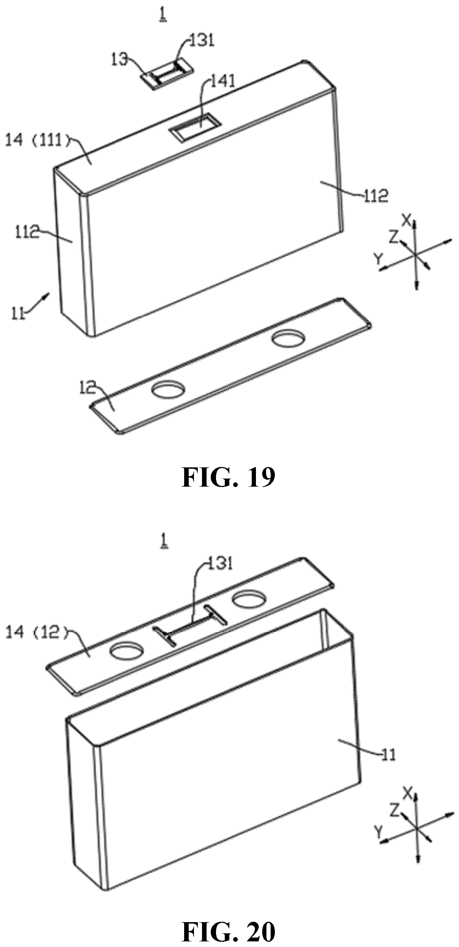

In some embodiments, with reference to FIG. 19, FIG. 19 is an exploded view of a shell 1 provided by some other embodiments of the present application. The shell 1 includes the first wall portion 14, the pressure relief component 13 and the first wall portion 14 are separably arranged, and the pressure relief component 13 is mounted on the first wall portion 14.

The pressure relief component 13 and the shell 1 are two independent components, which are independently molded and then mounted together. The pressure relief component 13 can be mounted on the first wall portion 14 in a welding mode, a bonding mode and the like. As an example, the first wall portion 14 is provided with a pressure relief hole 141, and the pressure relief component 13 covers the pressure relief hole 141.

In the embodiments, the pressure relief component 13 is mounted on the first wall portion 14, the pressure relief component 13 is a component independent of the shell 1, the pressure relief component 13 and the shell 1 can be independently produced and assembled, the production difficulty is low, and the efficiency is high.

In some embodiments, with reference to FIG. 18 and FIG. 19, the shell 1 includes the case 11 and the end cover 12, the case 11 is provided with the opening, and the end cover 12 seals the opening. At least one wall portion of the case 11 serves as the first wall portion 14.

The case 11 can include a plurality of wall portions, and the plurality of wall portions define the internal space of the case 11. In the case 11, one wall portion can be used as the first wall portion 14, or the plurality of wall portions are used the first wall portion 14. As an example, in FIG. 18 and FIG. 19, only one wall portion in the case 11 is the first wall portion 14.

In the embodiments, the case 11 has a pressure relief function, and during pressure relief, emissions discharged from the interior of the battery cell 10 do not easily affect external components on the outer side of the end cover 12, so that the possibility of the external components being damaged by the emissions is reduced. The external components can be components which are positioned outside the battery cell 10 and are connected to the electrode terminal 3 on the end cover 12.

In some embodiments, with reference to FIG. 18 and FIG. 19, the case 11 includes a bottom wall 111 and a plurality of side walls 112, the plurality of side walls 112 are arranged around the bottom wall 111, and an opening is formed at one end of the case 11 opposite to the bottom wall 111. The bottom wall 111 is the first wall portion 14.

The bottom wall 111 is a wall portion, opposite to the opening, in the case 11; the side walls 112 are wall portions, arranged around the bottom wall 111, in the case 11; and the bottom wall 111 and the side walls 112 are integrally molded. There may be three, four, five, six or more side walls 112 in the case 11. As examples, in FIG. 18 and FIG. 19, the case 11 is cuboid-shaped, and there are four side walls 112 in the case 11.

In the embodiments, the bottom wall 111 has the pressure relief function, and when the battery cell 10 is subjected to thermal runaway, pressure relief can be carried out through the bottom wall 111; and in the battery 100, the pressure relief component 13 is not easily shielded by other battery cells 10.

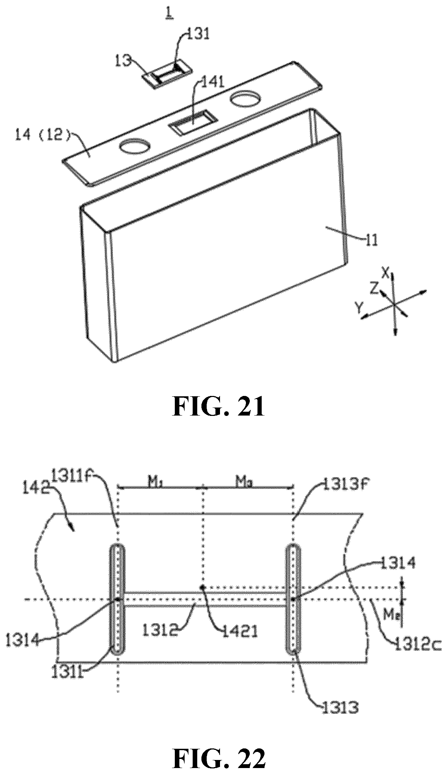

In some embodiments, with reference to FIG. 20 and FIG. 21, FIG. 20 is an exploded view of a shell 1 provided by some other embodiments of the present application; and FIG. 21 is an exploded view of a shell 1 provided by yet other embodiments of the present application. The shell 1 includes the case 11 and the end cover 12, the case 11 is provided with the opening, the end cover 12 seals the opening, and the end cover 12 serves as the first wall portion 14.

In the embodiment shown in FIG. 20, the end cover 12 is the pressure relief component 13.

In the embodiment shown in FIG. 21, the pressure relief component 13 and the end cover 12 are two independent components, and the pressure relief component 13 is mounted on the end cover 12.

In this embodiment, the end cover 12 has the pressure relief function, so the difficulty in molding the groove portion 131 in the end cover 12 is reduced.

In some embodiments, the first wall portion 14 is a rectangular wall portion, the second groove section 1312 extends in the length direction Y of the first wall portion, and the first groove section 1311 and the third groove section 1313 both extend in the width direction Z of the first wall portion.

It is to be understood that the length of the first wall portion 14 is larger than the width of the first wall portion 14, and the first groove section 1311 and the third groove section 1313 are both vertical to the second groove section 1312.

In the embodiments, the second groove section 1312 extends in the length direction Y of the first wall portion, the second wall portion can provide more space for the second groove section 1312, and the second groove section 1312 can be made longer to increase the pressure relief area of the pressure relief member 13.

In some other embodiments, the second groove section 1312 may also extend in the width direction Z of the first wall portion, and the first groove section 1311 and the third groove section 1313 extend in the length direction Y of the first wall portion.

In some embodiments, with reference to FIG. 22, FIG. 22 is a partial view of a first wall portion provided by some embodiments of the present application. In the thickness direction X of the pressure relief member (not shown in FIG. 22), the first wall portion 14 has an outer surface 142, and the outer surface 142 deviates from the interior of the housing 1. The first groove section 1311 has a first midplane 1311f extending in the extending direction, the second groove section 1312 has a second midplane 1312c extending in the extending direction, and the third groove section 1313 has a third midplane 1313f extending in the extending direction; and the minimum distance from the central point 1421 of the outer surface 142 to the first midplane 1311f is M₁, the minimum distance from the central point 1421 of the outer surface 142 to the second midplane 1312c is M₂, and the minimum distance from the central point 1421 of the outer surface 142 to the third midplane 1313f is M₃, which meet: M₂<M₁, M₂<M₃.

It can be M₁= M₃, or M₁<M₃, or M₁>M₃.

In an embodiment that the first wall portion 14 serves as the pressure relief component 13, the thickness direction X of the pressure relief component is the thickness direction of the first wall portion 14. In an embodiment that the pressure relief component 13 is mounted on the first wall portion 14, the thickness direction X of the pressure relief component is consistent with the thickness direction of the first wall portion 14.

The outer surface 142 is the surface of the first wall portion 14 deviating from the interior of the shell 1, that is, the outer surface 142 faces the exterior of the shell 1. In the thickness direction X of the pressure relief component, the first wall portion 14 further has an inner surface facing the interior of the shell 1, and the first groove section 1311, the second groove section 1312 and the third groove section 1313 can be sunken in the direction from the outer surface 142 of the first wall portion 14 to the inner surface, and can also be sunken in the direction from the inner surface of the first wall portion 14 to the outer surface 142. In an embodiment that the first wall portion 14 serves as the pressure relief component 13, one of the inner surface and the outer surface 142 of the first wall portion 14 serves as the first surface 132 of the pressure relief component 13, and the other one serves as the second surface 133 of the pressure relief component 13.

The central point 1421 of the outer surface 142 is the geometric center of the outer surface 142. The outer surface 142 can be circular, polygonal and the like. The polygon can be a triangle, a quadrangle, a pentagon, a hexagon and the like.

The first midplane 1311f is consistent with the first groove section 1311 in extending direction, and in the width direction of the first groove section 1311, the first midplane 1311f is arranged in the middle of the first groove section 1311, and the first midplane 1311f is in the direction vertical to the width direction of the first groove section 1311. In the embodiment that the first groove section 1311 is the multi-stage groove, the first midplane 1311f is arranged in the middle of the first-stage groove located at the deepest position in the first groove section 1311 in the width direction of the first groove section 1311. The second midplane 1312c is consistent with the second groove section 1312 in extending direction, and in the width direction of the second groove section 1312, the second midplane 1312c is arranged in the second groove section 1312, and the second midplane 1312c is in the direction vertical to the width direction of the second groove section 1312. In the embodiment that the second groove section 1312 is the multi-stage groove, the second midplane 1312c is arranged in the middle of the first-stage groove located at the deepest position in the second groove section 1312 in the width direction of the second groove section 1312. The third midplane 1313f is consistent with the third groove section 1313 in extending direction, and in the width direction of the third groove section 1313, the third midplane 1313f is arranged in the middle of the third groove section 1313, and the third midplane 1313f is in direction vertical to the width direction of the third groove section 1313. In the embodiment that the third groove section 1313 is the multi-stage groove, the third midplane 1313f is arranged in the middle of the first-stage groove at the deepest position in the third groove section 1313 in the width direction of the third groove section 1313.

The minimum distance from the central point 1421 of the outer surface 142 to the first midplane 1311f can be measured from a vertical line on the first midplane 1311f, and the vertical line passes through the central point 1421 of the outer surface 142. The minimum distance from the central point 1421 of the outer surface 142 to the second midplane 1312c can be measured from a vertical line on the second midplane 1312c, and the vertical line passes through the central point 1421 of the outer surface 142. The minimum distance from the central point 1421 of the outer surface 142 to the third midplane 1313f can be measured from a vertical line on the third midplane 1313f, and the vertical line passes through the central point 1421 of the outer surface 142.

When the internal pressure of the battery cell changes, the closer the position of the first wall portion 14 to the central point 1421 is, the easier the deformation is; and M₂<M₁, M₂<M₃, so that the first groove section 1311 and the third groove section 1313 are farther away from the central point 1421, and the anti-fatigue strength of the pressure relief component 13 at the first groove section 1311 and the third groove section 1313 is improved.

In some embodiments, in the thickness direction X of the pressure relief component, the projection of the central point 1421 of the outer surface 142 is within the second groove section 1312; and/or, | M₃-M₁|≤5m.

In the thickness direction of the pressure relief component 13, the projection of the central point 1421 is within the second groove section 1312, namely, the vertical line of the outer surface 142 passing through the central point 1421 passes through the second groove section 1312. As an example, the central point 1421 of the outer surface 142 is within the second midplane 1312c.

|M₃-M₁| can be the point value of any one of 0 mm, 1 mm, 2 mm, 3 mm, 4 mm, and 5 mm or a range value between any two of the previous values.

In the embodiments, the projection of the central point 1421 of the outer surface 142 is within the second groove section 1312, and the second groove section 1312 is closer to the central point 1421 of the outer surface 142, so that the pressure relief component 13 can crack along the second groove section 1312 more timely during pressure relief, and the pressure relief timeliness of the pressure relief component 13 is improved. |M₃-M₁|≤5mm, so that the first groove section 1311 and the third groove section 1313 are far away from the central point 1421, and the influence of deformation of the pressure relief component 13 near the central point 1421 on the first groove section 1311 and the third groove section 1313 is reduced.

In some embodiments, the outer surface 142 is rectangular, circular or regularly polygonal.

In an embodiment that the outer surface 142 is rectangular, the intersection point of two diagonal lines of the rectangle is the central point 1421 of the outer surface 142. The first wall portion 14 is a rectangular wall portion, the length direction of the outer surface 142 is consistent with the length direction Y of the first wall portion, and the width direction of the outer surface 142 is consistent with the width direction Z of the first wall portion. The outer surface 142 can be regularly rectangular or an irregularly rectangular, for example, two adjacent sides of the rectangle are connected by a chamfer, and the chamfer can be an arc chamfer.

In an embodiment that the outer surface 142 is circular, the circle center of the circle is the central point 1421 of the outer surface 142. The first wall portion 14 can be a circular wall portion, so that the outer surface 142 can be circular.

In an embodiment that the outer surface 142 is regularly polygonal, the center of an inscribed circle of the regular polygon is the central point 1421 of the outer surface 142. The regular polygon can be a regular triangle, a regular quadrangle, a regular pentagon, a regular hexagon and the like. The outer surface 142 can be regularly polygonal or irregularly polygonal, for example, two adjacent sides of the regular polygon are connected by a chamfer, and the chamfer can be an arc chamfer. The first wall portion 14 can be a regularly polygonal wall portion, so that the outer surface 142 can be regularly polygonal.

An embodiment of the present application provides a battery 100, which includes the battery cell 10 provided by any one of the above embodiments.

An embodiment of the present application provides an electrical device which includes the battery cell 10 provided by any one of the abovementioned embodiments, and the battery cell 10 is configured to provide electric energy to the electrical device.

An embodiment of the present application further provides a battery cell 10, which includes the shell 1 and the electrode assembly 2; the electrode assembly 2 is provided with the positive electrode tab and the negative electrode tab, and the electrode assembly 2 is accommodated in the shell 1. The shell 1 is in a cuboid shape and includes the case 11 and the end cover 12, the case 11 is provided with the opening, and the end cover 12 seals the opening; and the end cover 12 is provided with the positive electrode terminal and the negative electrode terminal, in which, the positive electrode terminal is electrically connected to the positive electrode tab by means of one current collecting member 4, and the negative electrode terminal is electrically connected to the negative electrode tab by means of the other current collecting member 4. The wall portion of the case 11 opposite to the end cover 12 is the pressure relief component 13, the pressure relief component 13 is provided with the groove portion 131 and is configured to be capable of cracking along the groove portion 131 so as to release the pressure inside the battery cell 10, and the pressure relief component 13 has the fracture initiation position 1314. The groove portion 131 includes the first groove section 1311, the second groove section 1312 and the third groove section 1313, in which, the first groove section 1311 and the third groove section 1313 are oppositely arranged, and the second groove section 1312 is connected to the first groove section 1311 and the third groove section 1313; the first groove section 1311, the second groove section 1312 and the third groove section 1313 are all grooves extending along the linear track; the first groove section 1311 and the third groove section 1313 are both vertical to the second groove section 1312; one end of the second groove section 1312 is connected to the midpoint position of the first groove section 1311, and the other end of the second groove section 1312 is connected to the midpoint position of the third groove section 1313; the residual thickness of the first groove section 1311 and the residual thickness of the third groove section 1313 are both less than the residual thickness of the second groove section 1312; and the residual thickness of the first groove section 1311 is equal to the residual thickness of the third groove section 1313. The fracture initiation positions 1314 are formed at both the first groove section 1311 and the third groove section 1313. The residual thickness of the first groove section 1311 is D₁, and the residual thickness of the second groove section 1312 is D₂, which meet: 0.15≤D₁/D₂≤0.95, 0.03 mm≤D₁≤0.5mm, and 0.25 mm≤D₂≤0.5mm.

The first groove section 1311 includes the first-stage groove 1311c and the second-stage groove 1311d which are distributed in the thickness direction X of the pressure relief component, the second-stage groove 1311d is formed in the groove bottom surface of the first-stage groove 1311c, and the groove bottom surface of the first-stage groove 1311c is flush with the groove bottom surface of the second groove section 1312. The third groove section 1313 includes the third-stage groove 1313c and the fourth-stage groove 1313d which are distributed in the thickness direction X of the pressure relief component, the fourth-stage groove 1313d is formed in the groove bottom surface of the third-stage groove 1313c, and the groove bottom surface of the third-stage groove 1313c is flush with the groove bottom surface of the second groove section 1312.

It is to be noted that, without conflict, the embodiments in the present application and the features in the embodiments may be combined with each other.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. A battery cell, comprising:
a shell comprising a pressure relief component, wherein the pressure relief component is provided with a groove portion and is configured to be capable of cracking along the groove portion so as to release the pressure inside the battery cell, and the pressure relief component has a fracture initiation position;
the groove portion comprises a first groove section, a second groove section and a third groove section, wherein the first groove section and the third groove section are oppositely arranged, the second groove section is connected to the first groove section and the third groove section; and the fracture initiation positions are formed at the first groove section and/or the third groove section.

2. The battery cell according to claim 1, wherein the fracture initiation position is formed at the first groove section, and the residual thickness of the first groove section is less than that of the second groove section.

3. The battery cell according to claim 2, wherein the residual thickness of the first groove section is D₁, and the residual thickness of the second groove section is D₂, which meet: 0.15≤D₁/D₂≤0.95.

4. The battery cell according to claim 3, wherein 0.3≤D₁/D₂≤0.9.

5. The battery cell according to claim 4, wherein 0.5≤D₁/D₂≤0.85.

6. The battery cell according to any one of claims 3 to 5, wherein 0.03 mm≤D₁≤0.5mm.

7. The battery cell according to claim 6, wherein 0.15mm≤D₁≤0.4mm.

8. The battery cell according to any one of claims 3 to 7, wherein 0.05 mm≤D₂≤0.65mm.

9. The battery cell according to claim 8, wherein 0.25 mm≤D₂≤0.5mm.

10. The battery cell according to any one of claims 2 to 9, wherein the depth of the first groove section is larger than that of the second groove section, so that the residual thickness of the first groove section is less than that of the second groove section.

11. The battery cell according to any one of claims 2 to 10, wherein the first groove section comprises a first-stage groove and a second-stage groove which are distributed in the thickness direction of the pressure relief component, and the second-stage groove is formed in the groove bottom surface of the first-stage groove.

12. The battery cell according to claim 11, wherein the groove bottom surface of the first-stage groove is flush with the groove bottom surface of the second groove section.

13. The battery cell according to claim 11, wherein in the thickness direction of the pressure relief component, the pressure relief component is provided with a first surface and a second surface which are opposite to each other, the first-stage groove and the second-stage groove are sequentially formed in the direction from the first surface to the second surface, and the groove bottom surface of the second-stage groove is closer to the second surface than the groove bottom surface of the second groove section; and
the groove bottom surface of the second-stage groove is connected to the groove bottom surface of the second groove section by a first inclined plane or a first arc surface.

14. The battery cell according to any one of claims 2 to 13, wherein the fracture initiation position is formed at the third groove section, and the residual thickness of the third groove section is less than that of the second groove section.

15. The battery cell according to claim 14, wherein the residual thickness of the third groove section is equal to that of the first groove section.

16. The battery cell according to claim 14 or 15, wherein the residual thickness of the second groove section is D₂, and the residual thickness of the third groove section is D₃, which meet: 0.15≤D₃/D₂≤0.95.

17. The battery cell according to claim 16, wherein 0.3≤D₃/D₂≤0.9.

18. The battery cell according to claim 17, wherein 0.5≤D₃ D₂≤0.85.

19. The battery cell according to any one of claims 16 to 18, wherein 0.03 mm≤D₃≤0.5mm.

20. The battery cell according to claim 19, wherein 0.15mm≤D₃≤0.4mm.

21. The battery cell according to any one of claims 14 to 20, wherein the depth of the third groove section is larger than that of the second groove section, so that the residual thickness of the third groove section is less than that of the second groove section.

22. The battery cell according to any one of claims 14 to 21, wherein the third groove section comprises a third-stage groove and a fourth-stage groove which are distributed in the thickness direction of the pressure relief component, and the fourth-stage groove is formed in the groove bottom surface of the third-stage groove.

23. The battery cell according to claim 22, wherein the groove bottom surface of the third-stage groove is flush with the groove bottom surface of the second groove section.

24. The battery cell according to claim 22, wherein in the thickness direction of the pressure relief component, the pressure relief component is provided with the first surface and the second surface which are opposite to each other, the third-stage groove and the fourth-stage groove are sequentially formed in the direction from the first surface to the second surface, and the groove bottom surface of the fourth-stage groove is closer to the second surface than the groove bottom surface of the second groove section; and
the groove bottom surface of the fourth-stage groove is connected to the groove bottom surface of the second groove section by a second inclined plane or a second arc surface.

25. The battery cell according to any one of claims 1 to 24, wherein in the extending direction of the second groove section, two ends of the second groove section are connected to the first groove section and the third groove section respectively.

26. The battery cell according to any one of claims 1 to 25, wherein the first groove section and the second groove section are connected at a first position, and in the extending direction of the first groove section, the first position deviates from two ends of the first groove section.

27. The battery cell according to claim 26, wherein in the extending direction of the first groove section, the first position is at the midpoint position of the first groove section.

28. The battery cell according to any one of claims 1 to 27, wherein the third groove section and the second groove section are connected at a second position, and in the extending direction of the third groove section, the second position deviates from two ends of the third groove section.

29. The battery cell according to claim 28, wherein in the extending direction of the third groove section, the second position is at the midpoint position of the third groove section.

30. The battery cell according to any one of claims 1 to 29, wherein the first groove section, the second groove section and the third groove section are all grooves extending along a linear track.

31. The battery cell according to claim 30, wherein the first groove section is vertical to the second groove section; and/or, the third groove section is vertical to the second groove section.

32. The battery cell according to any one of claims 1 to 31, wherein the first groove section, the second groove section and the third groove section define a pressure relief region; and
the pressure relief component is provided with a guide groove, the guide groove and the second groove section are arranged at an interval, and the guide groove is configured to guide the pressure relief region to be turned over and opened.

33. The battery cell according to claim 32, wherein the first groove section, the second groove section and the third groove section define two pressure relief regions, and the two pressure relief regions are respectively positioned on two sides of the second groove section; and
the pressure relief component is provided with two guide grooves, the second groove section is positioned between the two guide grooves, and the two guide grooves are configured to guide the two pressure relief regions to be turned over and opened respectively.

34. The battery cell according to claim 32 or 33, wherein the first groove section and the third groove section are both not in contact with the guide grooves.

35. The battery cell according to any one of claims 32 to 34, wherein in the thickness direction of the pressure relief component, the guide groove and the groove portion are respectively formed in two sides of the pressure relief component.

36. The battery cell according to any one of claims 32 to 35, wherein the guide grooves extend in the extending direction of the second groove section.

37. The battery cell according to any one of claims 32 to 36, wherein in the extending direction of the second groove section, the first groove section and the third groove section are located on two sides of the guide grooves respectively; the length of the part of the second groove section between the first groove section and the third groove section is L₁, and the length of the guide grooves is L₂, which meet: 1mm≤L₁- L₂≤10mm.

38. The battery cell according to claim 37, wherein 2mm≤L₁- L₂≤6mm.

39. The battery cell according to any one of claims 32 to 38, wherein in the extending direction of the first groove section, the space between the guide groove and the second groove section is L₃, and the length of the part of the first groove section extending to the guide groove is L₄, which meet: 0.5mm≤|L₃-L₄|≤15mm.

40. The battery cell according to claim 39, wherein 1mm≤|L₃-L₄|≤10mm.

41. The battery cell according to any one of claims 1 to 40, wherein the shell comprises a first wall portion;
the pressure relief component serves as the first wall portion; or, the pressure relief component and the first wall portion are separably arranged, and the pressure relief component is mounted on the first wall portion.

42. The battery cell according to claim 41, wherein the shell comprises:
a case having an opening; and
an end cover for sealing the opening, wherein the end cover serves as the first wall portion.

43. The battery cell according to claim 41, wherein the shell comprises:
the case having the opening; and
the end cover for sealing the opening; and
at least one wall portion of the case serves as the first wall portion.

44. The battery cell according to claim 43, wherein the case comprises a bottom wall and a plurality of side walls, the plurality of side walls are arranged around the bottom wall, and an opening is formed at one end, opposite to the bottom wall, of the shell; and
the bottom wall serves as the first wall portion.

45. The battery cell according to any one of claims 41 to 44, wherein the first wall portion is a rectangular wall portion, the second groove section extends in the length direction of the first wall portion, and the first groove section and the third groove section extend in the width direction of the first wall portion.

46. The battery cell according to any one of claims 41 to 45, wherein in the thickness direction of the pressure relief component, the first wall portion is provided with an outer surface, and the outer surface deviates from the interior of the shell;
the first groove section is provided with a first midplane extending in the extending direction, the second groove section is provided with a second midplane extending in the extending direction, and the third groove section is provided with a third midplane extending in the extending direction; and the minimum distance from the central point of the outer surface to the first midplane is M₁, the minimum distance from the central point of the outer surface to the second midplane is M₂, and the minimum distance from the central point of the outer surface to the third midplane is M₃, which meet: M₂<M₁, M₂<M₃.

47. The battery cell according to claim 46, wherein in the thickness direction of the pressure relief component, the projection of the central point of the outer surface is within the second groove section; and/or, | M₃-M₁|≤5mm.

48. The battery cell according to claim 46 or 47, wherein the outer surface is rectangular or circular or regularly polygonal.

49. A battery, comprising the battery cell according to any one of claims 1 to 48.

50. An electrical device, comprising the battery cell according to any one of claims 1 to 48, wherein the battery cell is configured to provide electric energy to the electrical device.
